# EUROPÄISCHE PATENTSCHRIFT

(11) **EP 2 326 233 B1**
(45) Veröffentlichungstag und Bekanntmachung des Hinweises auf die Patenterteilung: **06.01.2016**
(21) Anmeldenummer: 09781043.6
(22) Anmeldetag: 24.07.2009
(51) Int. Cl.: A47L 15/42, A47L 15/48

(54) **GESCHIRRSPÜLMASCHINE MIT SORPTIONSTROCKNUNGSVORRICHTUNG**
DISHWASHER WITH SORPTION DRYER DEVICE
LAVE-VAISSELLE MUNI D'UN DISPOSITIF DE SÉCHAGE À SORPTION

(30) Priorität: 28.07.2008 DE 102008040789
(43) Veröffentlichungstag der Anmeldung: 01.06.2011
(73) Patentinhaber: BSH Hausgeräte GmbH, 81739 München (DE)
(72) Erfinder: DELLE, Daniel, E-500012 Zaragoza (ES); FERBER, Ulrich, 89407 Dillingen (DE); JERG, Helmut, 89537 Giengen (DE); NANNT, Hans-Peter, 89547 Gerstetten (DE); PAINTNER, Kai, 86477 Adelsried (DE)
(86) Internationale Anmeldenummer: PCT/EP2009/059569
(87) Internationale Veröffentlichungsnummer: WO 2010/012659

(56) Entgegenhaltungen:
- WO-A-2006/061382
- DE-A1- 10 353 774
- DE-A1-102005 004 096

## Beschreibung

Die vorliegende Erfindung betrifft eine Geschirrspülmaschine mit einem Spülbehälter und einer Sorptionstrocknungsvorrichtung, die mit dem Spülbehälter zur Durchströmung mit einer Luftströmung luftleitend verbunden ist.

Z.B. aus der DE 103 53 774 A1, der DE 103 53 775 A1 oder der DE 10 2005 004 096 A1 sind Geschirrspülmaschinen mit einer sogenannten Sorptionskolonne zur Trocknung von Geschirr bekannt. Dabei wird im Teilprogrammschritt "Trocknen" des jeweiligen Geschirrspülprogramms der Geschirrspülmaschine zum Trocknen von Geschirr feuchte Luft aus dem Spülbehälter der Geschirrspülmaschine mittels eines Gebläses durch die Sorptionskolonne geleitet und durch deren reversibel dehydrierbares Trockenmaterial durch Kondensation Feuchtigkeit aus der hindurchgeführten Luft entzogen. Zur Regenerierung, d.h. Desorption der Sorptionskolonne wird deren reversibel dehydrierbares Trockenmaterial auf sehr hohe Temperaturen erhitzt. In diesem Material gespeichertes Wasser tritt dadurch als heißer Wasserdampf aus und wird durch eine mittels des Gebläses erzeugte Luftströmung in den Spülbehälter geleitet. Hierdurch kann eine Spülflotte und/oder ein in dem Spülbehälter befindliches Geschirr sowie die im Spülbehälter befindliche Luft erwärmt werden. Eine derartige Sorptionkolonne hat sich für eine energiesparende und leise Trocknung des Geschirrs als sehr vorteilhaft erwiesen. Zur Vermeidung lokaler Überhitzungen des Trockenmaterials beim Desorptionsvorgang ist z.B. bei der DE 10 2005 004 096 A1 eine Heizung in Strömungsrichtung der Luft vor dem Lufteinlass der Sorptionskolonne angeordnet. Trotz dieser "Luftheizung" bei der Desorption bleibt es in der Praxis schwierig, das reversibel dehydrierbare Trockenmaterial stets ausreichend und einwandfrei zu trocknen.

Aus WO 2006/061382 A1 ist eine weitere Geschirrspülmaschine mit einem Spülbehälter und einer Sorptionskolonne bekannt. Der Auslass und der Einlass des Spülbehälters ist ohne Zwischenschaltung eines Luftkanals mit der Sorptionskolonne verbunden.

Der Erfindung liegt die Aufgabe zugrunde, ein weiter verbessertes Sorptions- und/oder Desorptionsergebnis für das reversibel dehydrierbare Trockenmaterial der Sorptionseinheit einer Sorptionstrocknungsvorrichtung zu erreichen. Diese Aufgabe wird durch die Merkmale des Anspruchs 1 gelöst. Bei der erfindungsgemäßen Geschirrspülmaschine ist in Strömungsrichtung der Luftströmung betrachtet vor der Sorptionseinheit der Sorptionstrocknungsvorrichtung mindestens ein Gebläse zur Erzeugung einer Luftströmung sowie zwischen dem Gebläse und der Sorptionseinheit mit dem reversibel dehydrierbaren Trockenmaterial der Sorptionstrocknungsvorrichtung mindestens ein zugeordnetes Heizungselement zur Desorption vorgesehen. Ein oder mehrere Strömungskonditionierungsmittel zur Vergleichmäßigung des Strömungsquerschnittsprofils der Luftströmung beim Durchströmen der Sorptionstrocknungsvorrichtung sind vor dem Eintritt der Luftströmung in die Sorptionseinheit der Sorptionstrocknungsvorrichtung, insbesondere zwischen dem Gebläse und dem Heizungselement, und/oder insbesondere zwischen dem Heizungselement und der Sorptionseinheit, vorgesehen.

Durch das mindestens eine Strömungskonditionierungsmittel lässt sich die Luftströmung in gezielter, d.h. kontrollierter Weise, über ihr Strömungsquerschnittsprofil betrachtet eine im Wesentlichen ausgewogenere, insbesondere gleichverteiltere, Strömungscharakteristik, insbesondere hinsichtlich Strömungsgeschwindigkeit und/oder Strömungstemperatur, aufprägen, so dass ein verbessertes Sorptions- und/oder Desorptionsergebnis der Sorptionstrocknungsvorrichtung bei gleichzeitig verbesserter Energieeffizienz ermöglicht ist.

Durch die Vergleichmäßigung des Strömungsquerschnittsprofils der Luftströmung wird zum einen insbesondere beim Desorptionsvorgang in vorteilhafter Weise eine weiter verbesserte gleichmäßige Trocknung des reversibel dehydrierbaren Trocken- bzw. Sorptionsmaterials der Sorptionseinheit der Sorptionstrocknungsvorrichtung über deren Durchströmungsquerschnittsfläche betrachtet sichergestellt. Damit geht eine gesteigerte Energieeffizienz der Geschirrspülmaschine einher. Gleichzeitig sind lokale Überhitzungen des Trockenmaterials weitgehend vermieden. Zum anderen lässt sich durch die Vergleichmäßigung des Strömungsquerschnittsprofils der Luftströmung insbesondere vor und/oder beim Durchströmen der Sorptionstrocknungsvorrichtung umgekehrt natürlich in vorteilhafter Weise auch die Sorptionsleistung der Sorptionseinheit gegenüber unkonditionierten Strömungsverhältnissen erhöhen. Insbesondere ist es mittels der Strömungskonditionierungsmittel durch Vergleichmäßigung der Strömungsverhältnisse durch die Sorptionstrocknungsvorrichtung ermöglicht, eine vorgegebene, gewünschte Mindestdesorptionsleistung und/oder Mindestadsorptionsleistung der Sorptionstrocknungsvorrichtung für eine Vielzahl praktischer Gegebenheiten in definierter, d.h. kontrollierter Weise stets zu erreichen.

Verallgemeinert betrachtet sind gemäß der Erfindung die ein oder mehreren Strömungskonditionierungsmittel in Strömungsrichtung betrachtet noch vor dem Eintritt der Luftströmung in die Sorptionseinheit der Sorptionstrocknungsvorrichtung vorgesehen, um die Luftströmung vor und/oder bei ihrem Durchtritt durch das Sorptionsmaterial im Behälter der Sorptionseinheit an jedem Ort jeder Durchströmungsquerschnittsfläche des Behältervolumens der Sorptionseinheit hinsichtlich ihrer Strömungscharakteristik weitgehend gleich machen zu können. Insbesondere sind die ein oder mehreren Strömungskonditionierungsmittel derart ausgebildet, dass die Einzelströmungskomponenten der konditionierten Luftströmung hinsichtlich ein oder mehrere Strömungsparameter deren Strömungscharakteristik wie z.B. Strömungsgeschwindigkeit und/oder Temperatur weitgehend aneinander angeglichen werden können.

Gemäß einer zweckmäßigen Weiterbildung weist die Sorptionstrocknungsvorrichtung mindestens eine Sorptionseinheit mit reversibel dehydrierbaren Trockenmaterial, insbesondere einem Zeolithfestbett oder einer Zeolithschüttung, auf. Eine Zeolithschüttung ist insbesondere durch loses Zeolith-Granulat, vorzugsweise in Kügelchenform gebildet. Das Trockenmaterial bzw. Sorptionsmaterial ist vorzugsweise mit weitgehend gleicher Schichtdicke in einem Behälter oder Gehäuse der Sorptionseinheit untergebracht. Der Behälter der Sorptionseinheit ist an deren Lufteintrittsöffnung und/oder Luftaustrittsöffnung jeweils vorzugsweise von mindestens einem Sieb begrenzt bzw. abgedeckt. Auf praktikable Weise ist damit eine kompakte Lagerung des Sorptionsmaterials bei gleichzeitig ausreichender Luftdurchgängigkeit ermöglicht, so dass das Sorptionsmaterial sowohl Feuchtigkeit aus durchströmender Luft durch Kondensation ausreichend absorbieren als auch gespeicherte Feuchtigkeit durch Erhitzen an durchströmende Luft wieder abgeben bzw. desorbieren kann.

Gemäß einer weiteren vorteilhaften Weiterbildung der Erfindung sind die ein oder mehreren Strömungskonditionierungsmittel derart ausgebildet, dass die Luftströmung durch die Sorptionseinheit der Sorptionstrocknungsvorrichtung mit einem im Wesentlichen gleichen Volumenstrom pro Flächen- und/oder Volumeneinheit des Trockenmaterials der Sorptionseinheit hindurchströmt. Durch diese Vergleichmäßigung der Luftbeströmung, bezüglich möglichst vieler, insbesondere aller Eintrittsstellen der Lufteintrittsquerschnittsfläche der Sorptionseinheit ist verbessert sichergestellt, dass das Trockenmaterial der Sorptionseinheit durch einen Wärmeeintrag mittels Luftströmung energieeffizient sowie kurzfristig weitgehend vollständig desorbiert, d.h. entfeuchtet werden kann, so dass sein Gesamtvolumen weitgehend vollständig trocken für den nächsten Sorptionsvorgang wie z.B. für den "Trocknungsschritt" eines nachfolgenden Geschirrspülprogramms zur Verfügung steht. Durch die Verkürzung der Zeitspanne zwischen dem Startzeitpunkt der Luftbeströmung wie z.B. beim Starten eines Geschirrspülprogramms und dem Zeitpunkt des Regenerierungsendes der Sorptionseinheit kann der für die Desorption aufgewandte Wärmeeintrag bzw. Energieaufwand zum Aufheizen der hindurchströmenden Luft nahezu vollständig für das Aufheizen einer Spülflotte bzw. eines Spülbads, eines zu reinigenden Geschirrs, und/oder von Luft im Spülbehälter in einem nachfolgenden, neuen Programmschritt wie z.B. "Vorspülen" oder "Reinigen" rekuperativ verwendet werden. Es sind also unakzeptable Wartezeiten zur Regenerierung der Sorptionseinheit sowie unerwünschte Verluste der für die Desorption aufgewandten Wärmeenergie weitgehend vermieden.

Umkehrt lässt sich auf diese Weise selbstverständlich auch die Adsorptionsleistung der Sorptionseinheit, d.h. deren Fähigkeit bzw. Vermögen, Feuchtigkeit aus der durchströmenden Luft wie z.B. beim "Trocknungsschritt" eines Geschirrspülprogramms zu binden, insbesondere kondensieren zu lassen, gegenüber dem Fall unkonditonierter Strömungsverhältnisse erhöhen.

Insbesondere kann es vorteilhaft sein, wenn die ein oder mehreren Strömungskonditionierungsmittel die Luftströmung derart konditionieren, dass im Wesentlichen möglichst viele, vorzugsweise jede Stelle der Eintrittsquerschnittsfläche der mit reversibel dehydrierbaren Trockenmaterial bestückten Sorptionseinheit der Sorptionstrocknungsvorrichtung mit einem Luftvolumenstrom von weitgehend derselben Eintrittstemperatur durchströmt ist. Dadurch lässt eine weiter verbesserte, insbesondere definiertere und höhere Desorptionsleistung der Sorptionstrocknungsvorrichtung sicherstellen.

Zweckmäßig kann es gemäß einer weiteren vorteilhaften Weiterbildung der Erfindung sein, .wenn die ein oder mehreren .Strömungskonditionierungsmittel die Luftströmung derart konditionieren, dass im Wesentlichen jede Stelle der Eintrittsquerschnittsfläche der mit reversibel dehydrierbaren Trockenmaterial bestückten Sorptionseinheit der Sorptionstrocknungsvorrichtung mit einem Luftvolumenstrom von weitgehend derselben Strömungsgeschwindigkeit durchströmt ist. Insbesondere durch Gleichmachungen der Strömungsgeschwindigkeiten der Luftströmung an den verschiedenen Einströmorten der Eintrittsquerschnittsfläche der Sorptionseinheit ist eine verbesserte Desorption und/oder Adsorption ermöglicht.

Insbesondere kann es zweckmäßig sein, das Gehäuse der Sorptionstrocknungsvorrichtung derart zu formen und in der Geschirrspülmaschine zu positionieren, dass es von einer im Wesentlichen vertikalen Luftströmung durchströmt werden kann. Dadurch kann die Sorptionseinheit im Gehäuse der Sorptionstrocknungsvorrichtung vorzugsweise in einer im Wesentlichen horizontalen Lageebene angeordnet sein. Wenn sie eine Sorptionsmaterialschüttung, insbesondere Zeolithschüttung, enthält, sind somit einseitige, unkontrollierbare Materialverschiebungen und unerwünschte Materialschichtungen, wie sie z.B. bei einer schräggestellten Sorptionseinheit auftreten können, weitgehend vermieden, so dass eine gleichmäßige Schichtdicke an Sorptionsmaterial über die Breite der Durchströmungsöffnung der Sorptionseinheit hinweg betrachtet sichergestellt und damit definierte, gleichmäßige Durchströmungsverhältnisse dauerhaft eingehalten werden können. Weiterhin ist es dadurch in vorteilhafter Weise ermöglicht, die Sorptionstrocknungsvorrichtung insbesondere in einer Bodenbaugruppe unterhalb des Spülbehälters der Geschirrspülmaschine als flache, kompakte Baueinheit unterzubringen.

Gemäß einer weiteren zweckmäßigen Weiterbildung der Erfindung ist die Sorptionstrocknungsvorrichtung über mindestens einen Luftführungskanal mit mindestens einem Auslass und mit mindestens einem Einlass des Spülbehälters verbunden ist. Der Luftführungskanal ist dabei vorzugsweise weitgehend außerhalb des Spülbehälters angeordnet. Der auslassseitige Rohrabschnitt des Luftführungskanals ist vorzugsweise mit mindestens einem Einlass des Spülbehälters in dessen bodennahem Bereich verbunden. Der einlassseitige Rohrabschnitt des Luftführungskanals ist hingegen zweckmäßigerweise mit mindestens einem Auslass des Spülbehälters in dessen deckennahem Bereich verbunden. Dadurch ist weitgehend vermieden, dass beim Ansaugen von Luft aus dem Spülbehälter Wasser oder Spülflotte in den Luftführungskanal und von dort in die Sorptionstrocknungsvorrichtung gelangen kann, was sonst zu einer unerwünschten Sättigung deren Sorptionsmaterials führen würde, so dass die Adsorptions- und Desorptionswirkung des Sorptionsmaterials verloren gehen würde.

Insbesondere kann es zweckmäßig sein, dass der einlassseitige Rohrabschnitt des Luftführungskanals in das Gehäuse der Sorptionstrocknungsvorrichtung derart im bodennahen Bereich einmündet, dass seine Einströmungsrichtung, insbesondere um etwa 90 °, in die Durchströmungsrichtung des Gehäuses umgelenkt ist. Insbesondere dadurch kann die Sorptionstrocknungsvorrichtung platzsparend im Unterboden der Geschirrspülmaschine untergebracht werden. Darüber hinaus lässt sich dadurch eine Hauptströmungsrichtung von unten nach oben durch die Sorptionstrocknungsvorrichtung vorgeben, so dass das Sorptionsmaterial der Sorptionseinheit weitgehend geradlinig durchströmt werden kann. Ferner lässt sich die Luft aus dem Luftführungskanal so an die Sorptionstrocknungsvorrichtung heranführen wird, dass sie bei Erwärmung bzw. Erhitzung mittels mindestens eines Heizungselements vor der Eintrittsöffnung der Sorptionseinheit schon aufgrund von Eigenkonvektion von unten nach oben durch die Sorptionseinheit strömt und im Bereich des Bodens des Spülbehälters in dessen Inneres durch mindestens einen Einlass hineingelangt.

Gemäß der Erfindung ist in Strömungsrichtung der Luftströmung betrachtet vor der Sorptionseinheit der Sorptionstrocknungsvorrichtung mindestens ein Gebläse zur Erzeugung oder Unterstützung der Luftströmung vorgesehen. Insbesondere ist das Gebläse oder ein Lüfter in den einlassseitigen Rohrabschnitt des Luftführungskanals vor der Sorptionstrocknungsvorrichtung zur Erzeugung der Luftströmung zur Sorptionseinheit der Sorptionstrocknungsvorrichtung eingefügt.

Erfindungsgemäß ist in Strömungsrichtung betrachtet zwischen dem Gebläse und der Sorptionseinheit mit dem reversibel dehydrierbaren Trockenmaterial der Sorptionstrocknungsvorrichtung mindestens ein zugeordnetes Heizungselement zur Desorption vorgesehen. Insbesondere kann es im Gehäuse der Sorptionstrocknungsvorrichtung in Strömungsrichtung betrachtet vor deren Sorptionseinheit mit dem reversibel dehydrierbaren Trockenmaterial zu dessen Desorption als Bestandteil der Sorptionstrocknungsvorrichtung untergebracht sein. Dadurch sind zum einen Wärmeverluste aufgrund zu langer Strömungswege weitgehend vermieden. Zum anderen sind lokale Überhitzungen des Sorptionsmaterials weitgehend vermieden, wie sie z.B. bei direktem Kontakt des Sorptionsmaterials mit einer in ihm verlegten Heizschlange auftreten könnten. Denn die aufgeheizte Luft kann nun mit einem durch die Strömungskonditionierungsmittel aufgeprägten, vergleichmäßigten Strömungsquerschnittsprofil gleichmäßiger, d.h. verteilter bzw. ausgewogener durch das Sorptionsmaterial der Sorptionseinheit hindurchströmen. Insbesondere wenn die Sorptionstrocknungsvorrichtung im Unterboden der Geschirrspülmaschine eingebaut ist und eine vertikale Hauptströmungsrichtung aufweist, kann es zweckmäßig sein, das Heizungselement im Gehäuse der Sorptionstrocknungsvorrichtung unterhalb der Eintrittsquerschnittsfläche der Sorptionseinheit vorzusehen.

Insbesondere erstreckt sich das jeweilige Heizungselement im Wesentlichen über die gesamte lichte Weite der Eintrittsquerschnittsfläche der Sorptionseinheit mit dem reversibel dehydrierbaren Sorptions- bzw. Trockenmaterial. Dadurch ist es möglich, die Luftströmung auch im Bereich der sich in Tiefenrichtung erstreckenden Längswände, d.h. insbesondere an den Seitenrändern, der Sorptionseinheit genauso wie im Mittenbereich der Querschnittsbreite der Sorptioneinheit aufzuheizen. Dadurch sind lokale Feuchtstellen im Trockenmaterial insbesondere im Bereich der Seitenwände der Sorptionseinheit bei der Desorption weitgehend vermieden. Wenn die Breite der Sorptionseinheit im Wesentlichen der Innenbreite des Gehäuses der Sorptionstrocknungsvorrichtung entspricht, verläuft das Heizungselement vor der Eintrittsquerschnittsfläche der Sorptionseinheit vorzugsweise im Wesentlichen über die gesamte Innenbreite des Gehäuses der Sorptionstrocknungsvorrichtung. Um die Eintrittsquerschnittsfläche der Sorptionseinheit zur Desorption dessen Sorptionsmaterialvolumens möglichst vollflächig und damit weitgehend homogen aufheizen zu können, so dass lokale Aufheizungslücken im Sorptionsmaterialvolumen weitgehend vermieden sind, ist es in Tiefenrichtung der Sorptionseinheit, insbesondere des Gehäuses, der Sorptionstrocknungsvorrichtung betrachtet vorzugsweise schlangenlinienförmig bzw. mäanderförmig verlegt. Die Mäanderwindungen des Heizungselements verlaufen vorzugsweise auf der vollen Innenbreite der Eintrittsfläche der Sorptionseinheit zwischen den beiden Seitenwänden des Gehäuses der Sorptionstrocknungsvorrichtung hin und her. Insbesondere liegen dabei die Windungen des Heizungselements in etwa derselben Lageebene.

Gemäß einer vorteilhaften Weiterbildung der Erfindung sind die ein oder mehreren Strömungskonditionierungsmittel in Strömungsrichtung betrachtet zwischen dem Gebläse und dem Heizungselement derart spezifisch für das Heizungselement vorgesehen, dass eine Beströmung an möglichst vielen Stellen, insbesondere im Wesentlichen jeder Stelle der Beströmungsoberfläche des Heizungselements mit weitgehend demselben Luftvolumenstrom, insbesondere gleicher Strömungsgeschwindigkeit, bewirkt ist. Insbesondere sitzt das Heizungselement im Gehäuse der Sorptionstrocknungsvorrichtung vor der Eintrittsfläche deren Sorptionseinheit mit einem vorgebbaren Spaltabstand derart, dass eine "Luftheizung" für das Sorptionmaterial der Sorptionseinheit bewirkt ist. Zweckmäßigerweise sind die Strömungskonditionierungsmittel für das Heizungselement im Gehäuse der Sorptionstrocknungsvorrichtung in Strömungsrichtung betrachtet vor dem dort positionierten Heizungselement untergebracht. Dadurch ist eine kompakte Baueinheit ermöglicht. Weiterhin erlaubt dies, der Luftströmung ein vergleichmäßigtes Strömungsquerschnittsprofil vor dem Erreichen und Beströmen des Heizungselements in einfacher und zuverlässiger Weise aufprägen zu können. Wenn sich das Heizungselement im Wesentlichen über die gesamte Breite der Sorptionseintrittsfläche erstreckt, erstreckt sich das in Strömungsrichtung betrachtet dem Heizungselement voranpositionierte Konditionierungsmittel vorzugsweise weitgehend über die Breite des Heizungselements, so dass ein weitgehend isothermer Wärmeübertrag über die Breite des Heizungselements von diesem auf die vorbeiströmende Luftströmung sichergestellt ist. Zweckmäßigerweise ist das Konditionierungsmittel vor dem Heizungselement auch hinsichtlich dessen Tiefenerstreckung angepasst. Allgemein ausgedrückt weist also das Konditionierungsmittel im Wesentlichen die vom Heizungselement belegte äußere eingangsseitige Beströmungsfläche als Abmessung auf und sitzt in einem vorgebbaren Beströmungsabstand auf Lücke entfernt vor diesem, wobei es insbesondere parallel sowie kongruent zur Beströmungsfläche des Heizungselements liegt.

Zweckmäßigerweise weist das Heizungselement mindestens einen Heizstab oder mindestens eine Drahtwendel auf. Dadurch ist eine besonders kostengünstige, einfache und zuverlässige Erhitzung der Luftströmung ermöglicht.

Zweckmäßig kann es insbesondere sein, wenn die Drahtwendel bzw. Heizwendel eine sich aufweitende, insbesondere konische Geometrieform aufweist. Dadurch kann die Drahtwendel nicht nur die Aufheizung der Luftströmung für die Desorption des Sorptionsmaterials der Sorptionseinheit bewirken, sondern zusätzlich als Strömungskonditionierungsmittel zur Vergleichmäßigung der Luftströmung dienen. Ist die Zentralachse der Drahtwendel in Strömungsrichtung ausgerichtet, dann ist weitgehend sichergestellt, dass ein ankommender Luftteilstrom auf seinem Strömungsweg nur lediglich einen einzigen der in verschiedenen Ganghöhenlagen angeordneten Heizwendelabschnitte be- und/oder umströmt und nicht mehrfach auf hintereinanderliegende Heizwendelabschnitte trifft. Auf diese Weise sind lokale Überhitzungen der Heizwendel weitgehend vermieden.

Vorteilhaft kann es ggf. sein, wenn der Heizstab oder die Drahtwendel zusätzlich von einem äußeren Zwangsbeströmungsrohr eingekapselt sind. Dadurch lässt sich eine erhöhte Beströmungsgeschwindigkeit der Luft erreichen, mit der diese über den Heizstabs oder die Drahtwendel strömt, so dass ein erhöhter, effizienter Wärmeübertrag vom Heizstab oder die Drahtwendel auf die Luftströmung bewirkt ist.

Gemäß einer weiteren vorteilhaften Weiterbildung der Erfindung kann mindestens ein Heizungselement wie z.B. ein Heizungsstab, eine Heizwendel, oder eine Heizschlange in einem zusätzlichen Rohrabschnitt innerhalb des Luftführungsabschnitts zur Sorptionstrocknungsvorrichtung und/oder deren Gehäuses untergebracht sein. Dies erlaubt eine einfache Montageanordnung für das Heizungselement und eine einfache Anbindung an die Sorptionstrocknungsvorrichtung. Zum Einströmen von Luft ist dabei vorzugsweise das dem einlassseitigen Luftführungskanalabschnitt zugewandte Ende offen. Insbesondere kann das Rohr in vorteilhafter Weise als Konditionierungsmittel dienen und derart ausgebildet sein, dass über den Längsverlauf des jeweiligen Heizungselements hinweg betrachtet ein im Wesentlichen gleicher Wärmeabtrag an jeder Ortsposition des Rohrs für in das Rohr einströmende Luft bewirkt ist, d.h. die Luftströmung kann im Zwischenraum bzw. Spalt zwischen dem Heizungselement und dem dieses außen in radialem Spaltabstand bzw. mit Freiraum umgebenden äußeren Rohr weitgehend durch einen isothermen Wämeübergang entlang der Längserstreckung des Heizungselements aufgeheizt werden. Auf diese Weise lässt sich beim Aufheizungsvorgang für die Desorption der Sorptionseinheit eine Vergleichmäßigung der Luftströmung hinsichtlich deren örtlichen Temperaturprofils bewirken. Dazu kann es insbesondere zweckmäßig sein, wenn sich das Rohr in Strömungsrichtung betrachtet hinsichtlich seiner Durchlassquerschnittsfläche verjüngt. Dadurch kann die Strömungsgeschwindigkeit der in das Rohr eintretenden Luftströmung auf das Ende des Rohres zu höher gemacht werden, um dort einen Abfall des statischen Drucks durch Zunahme des dynamischen Drucks ausgleichen zu können.

Zweckmäßigerweise weist das Rohr an seinem Ende und/oder seiner Oberseite ein oder mehrere Luftaustrittsöffnungen auf, durch die Luft in Richtung Sorptionseinheit der Sorptionstrocknungsvorrichtung derart ausströmen kann, dass für die an der Eintrittsfläche der Sorptioneinheit ankommenden Luft hinsichtlich Volumendurchsatz und/oder Eintrittstemperatur eine Vergleichmäßigung herbeigeführt ist.

Zusätzlich oder unabhängig hiervon kann es insbesondere zweckmäßig sein, in mindestens einer Lageebene über und/oder unter dem Heizungselement mindestens ein Loch- oder Schlitzblech als Strömungskonditionierungsmittel anzuordnen. Der Lücken- bzw. Spaltabstand des Loch- oder Schlitzbleches oder des Rohrabschnitts von dem Heizungselement und/oder die Größe der Löcher oder Schlitze des Loch- oder Schlitzbleches oder des Rohres sind insbesondere so gewählt, dass die Sorptionseinheit der Sorptionstrocknungsvorrichtung hinsichtlich Luftvolumendurchsatz und/oder Eintrittstemperatur bezüglich ihrer Eintrittsquerschnittsfläche im Wesentlichen gleichmäßig angeströmt ist.

Weiterhin kann es ggf. zweckmäßig sein, wenn an dem Heizungselement Lamellen zur Strömungskonditionierung und/oder Oberflächenvergrößerung des Heizungselements vorgesehen sind.

Gemäß einer weiteren vorteilhaften Weiterbildung kann es zweckmäßig sein, wenn die ein oder mehreren Strömungskonditionierungsmittel in Strömungsrichtung betrachtet zwischen mindestens einem Heizungselement und der Sorptionseinheit der Sorptionstrocknungsvorrichtung derart spezifisch für die Sorptioneinheit vorgesehen sind, dass möglichst viele Stellen, insbesondere im Wesentlichen jede Stelle der Eintrittsquerschnittsfläche der mit reversibel dehydrierbaren Trockenmaterial bestückten Sorptionseinheit der Sorptionstrocknungsvorrichtung mit weitgehend demselben Luftvolumenstrom, insbesondere mit jeweils einem Luftvolumenstrom derselben Strömungsgeschwindigkeit, und/oder derselben Temperatur, beaufschlagt und durchströmt ist.

Gemäß einer vorteilhaften Weiterbildung der Erfindung sind die ein oder mehreren Strömungskonditionierungsmittel durch mindestens eine Strömungsleiteinrichtung, insbesondere mindestens ein die Luftströmung umlenkendes Leitblech, gebildet. Diese Strömungsumlenkungskomponenten sind konstruktiv besonders einfach herstellbar und im Luftführungskanal zur und/oder im Gehäuse der Sorptionstrocknungsvorrichtung vor der Eintrittsfläche der Sorptionseinheit anordenbar. Sie sind insbesondere als eine Art Strömungsgleichrichter ausgebildet.

Alternativ dazu kann es zweckmäßig sein, ein oder mehrere Strömungskonditionierungsmittel durch mindestens ein Lochgitter und/oder mindestens ein Loch- oder Schlitzblech auszubilden, was ebenfalls konstruktiv einfach herstellbar ist. Zur Vergleichmäßigung der Luftströmung sind die Löcher und/oder Schlitze des Lochgitters und/oder des Loch- oder Schlitzbleches vorzugsweise unterschiedlich groß gewählt.

Zusätzlich oder unabhängig hiervon kann es ggf. auch vorteilhaft sein, die Sorptionseinheit selbst zumindest teilweise als Strömungskonditionierungsmittel zur Bewirkung einer weitgehend gleichmäßigen Durchströmung auszubilden. Insbesondere kann das jeweilige Sieb, das den Lufteintritt und/oder Luftaustritt der Sorptionseinheit begrenzt, beispielsweise durch entsprechende Auswahl seiner Sieböffnungen zumindest teilweise ein Strömungskonditionierungsmittel bilden.

Gemäß einer vorteilhaften Weiterbildung der Erfindung ist die Sorptionstrocknungsvorrichtung mit dem Spülbehälter über mindestens einen Luftführungskanal luftleitend verbunden. In diesem ist vorzugsweise in einem einlassseitigen Kanalabschnitt ein Gebläse zum Ansaugen von Luft aus dem Spülbehälter und Erzeugen einer Luftströmung zur Sorptionstrocknungsvorrichtung vorgesehen. Diese weist in ihrem Gehäuse insbesondere eine Heizung auf, die vor der Eintrittsfläche ihrer Sorptionseinheit mit reversibel dehydrierbaren Material angeordnet ist. Das Gebläse bzw. der Lüfter erzeugt eine Luftströmung durch die Sorptionstrocknungsvorrichtung hindurch. In Strömungsrichtung betrachtet ist vor dem Austritt der Luftströmung aus der Sorptionseinheit mindestens eine Strömungskonditionierungseinrichtung zur Vergleichmäßigung der Luftströmung vorgesehen.

Durch die Mittel zur Strömungskonditionierung lässt sich die Strömung, welche durch die Sorptionstrocknungsvorrichtung hindurchströmt, derart beeinflussen, dass sie z.B. für einen Desorptionsvorgang das in der Sorptionseinheit enthaltene reversibel dehydrierbare Material im Wesentlichen gleichmäßig und vollständig erwärmt und gespeichertes Wasser als Wasserdampf in den Spülbehälter der Geschirrspülmaschine abgibt. Umgekehrt lässt sich beim Sorptionsvorgang verbessert Feuchtigkeit aus der feuchten Luft, die z.B. beim "Trocknungsschritt" der Geschirrspülmaschine zum Abschluss eines Geschirrspülprogramms über mindestens einen Luftführungskanal durch die Sorptionseinheit hinduchgeleitet wird, von deren Sorptionsmaterial verbessert, d.h. mit höherem Wirkungsgrad aufnehmen. Die Sorptionseinheit kann also sowohl bei der Desorption als auch Sorption verbessert genutzt werden, da das reversibel dehydrierbare Material der Sorptionseinheit bezüglich seiner Adsorptions- und Desorptionseigenschaft besonders effektiv eingesetzt wird. Ein etwaig ungleichmäßiges Strömungsprofil am Austritt des Gebläses wird ausgeglichen und eine ungleichmäßige Strömungsverteilung innerhalb der Sorptionseinheit bezüglich der, insbesondere aller Flächen- und/oder Volumeneinheiten des reversibel dehydrierbaren Materials wird weitgehend vermieden.

Gemäß einer Variante der Erfindung sind die ein oder mehreren Strömungskonditionierungsmittel zwischen Gebläse und Sorptionseinheit der Sorptionstrocknungsvorrichtung angeordnet. Die Luftströmung kann dabei vor dem Eintritt in die Sorptionseinheit in geeigneter Weise beeinflusst werden, so dass die Sorptionseinrichtung effektiv betrieben werden kann.

Ist gemäß einer besonderen Ausführung der Erfindung die Sorptionseinheit selbst zumindest teilweise als Strömungskonditionierungsmittel ausgebildet, um eine gleichmäßige Durchströmung zu bewirken, so kann beispielsweise durch einen geeigneten Rückstau der Strömungsluft an der Sorptionseinheit oder mittels eines an die tatsächlich vorliegende Luftströmung angepassten, gegebenenfalls über die Durchströmungsfläche der Sorptionseinheit unterschiedlichen Strömungswiderstands die zumindest weitgehend vollständige Ausnutzung der Eigenschaften des reversibel dehydrierbaren Materials erfolgen.

Vorzugsweise ist eine Heizung in einem Strömungskanal zwischen dem Gebläse und der Sorptionseinrichtung angeordnet. Zusätzlich oder unabhängig hiervon kann durch eine gleichmäßige Strömungsgeschwindigkeit auch eine weitgehend gleiche Temperaturverteilung über den Heizungsquerschnitt der Heizung und/oder Festbettquerschnitt der Sorptionseinheit erreicht werden. "Hot Spots" und kalte Stellen in der Sorptionseinheit sind dadurch weitgehend vermieden.

Vorteilhafterweise ist die Einrichtung zur Strömungskonditionierung zwischen dem Gebläse und der Heizung und/oder zwischen der Heizung und der Sorptionseinheit angeordnet. Insbesondere ist es vorteilhaft, die Einrichtung zur Strömungskonditionierung in Abhängigkeit des verwendeten Gebläses und der Heizung sowie der geometrischen Verhältnisse der Strömungsleitung zwischen Gebläse, Heizung und Sorptionseinheit sowie des Gehäuses, in welchem die Heizung und/oder die Sorptionseinheit angeordnet sind, so auszubilden, dass sie an der effektivsten Stelle des Luftströmungsweges angeordnet ist. Besonders vorteilhaft ist, dass versucht wird, mittels der Einrichtung zur Strömungskonditionierung eine im Wesentlichen gleichmäßige Temperaturverteilung und gleichzeitig ein im Wesentlichen gleichmäßiges Strömungsprofil an der Sorptionseinheit zu erreichen.

Vorteilhafterweise ist das jeweilige Strömungskonditionierungsmittel bzw. Strömungskonditionierungseinrichtung insbesondere derart ausgebildet, dass die Luftströmung durch die Sorptionseinheit mit einem im Wesentlichen gleichen Volumenstrom pro Flächen- und/oder Volumeneinheit der Sorptionseinheit hindurchströmt. Hierdurch wird eine optimale Ausnutzung des reversibel dehydrierbaren Materials erreicht. Es entstehen keine wesentlichen Ungleichmäßigkeiten in der Erwärmung und/oder Durchströmung des Materials, so dass bei der Sorption die Feuchtigkeitsaufnahme und/oder bei der Desorption die Feuchtigkeitsabgabe in Bezug auf das vorhandene dehydrierbare Material weitgehend gleichmäßig verteilt erfolgen kann.

Zum gleichen Zweck kann es vorteilhaft sein, wenn die Strömungskonditionierungseinrichtung insbesondere derart ausgebildet ist, dass die Luftströmung durch die Sorptionseinheit mit einer über die Eintrittsquerschnittsfläche im Wesentlichen gleichen Eintrittstemperatur hindurchströmt. Das Material kann auch hierdurch optimal bzgl. seiner Speicherkapazität für einen Sorptionsvorgang und/oder Abgabemöglichkeit für einen Desorptionsvorgang ausgenutzt werden.

Vorteilhafterweise ist die Einrichtung zur Strömungskonditionierung insbesondere eine Strömungsleiteinrichtung. Mittels der Strömungsleiteinrichtung wird die Strömung in ihrem Profil, ihrer Richtung und/oder gegebenenfalls ihrer Geschwindigkeit vorzugsweise derart geleitet, dass das Ziel der gleichmäßigen Durchströmung der Sorptionstrocknungsvorrichtung, insbesondere Sorptionseinheit erreicht wird.

In einer bevorzugten Ausführung der Erfindung besteht die Einrichtung zur Strömungskonditionierung aus einem Lochgitter und/oder einem Loch- oder Schlitzblech. Lochgitter, Loch- oder Schlitzblech sind insbesondere derart in der Strömung angeordnet, dass die zu konditionierende, einströmende Luft am Eingang in die Sorptionseinheit so konditioniert wird, dass sie weitgehend gleichmäßig die Sorptionstrocknungsvorrichtung, insbesondere Sorptionseinheit durchströmt. Die Anordnung von Lochgitter, Loch- oder Schlitzblech kann insbesondere zwischen dem Gebläse und der Heizung und/oder zwischen der Heizung und der Sorptions-einheit sein.

Insbesondere wenn ein ungleichmäßiges Strömungsprofil am Austritt des Gebläses vorliegt, kann es vorteilhaft sein, wenn die Löcher und/oder Schlitze des Lochgitters bzw. des Loch- oder Schlitzbleches unterschiedlich groß sind. Hierdurch werden mehr oder weniger große Strömungswiderstände erzeugt, welche dazu beitragen, das Strömungsprofil in gewünschter Weise zu vergleichmäßigen.

Vorzugsweise beinhaltet die Einrichtung zur Strömungskonditionierung insbesondere mindestens ein die Strömung umlenkendes Leitblech. Ein ungleichmäßiges Strömungsprofil, das am Austritt des Gebläses vorhanden ist, kann durch ein oder mehrere die Strömung umlenkende Leitbleche vergleichmäßigt werden. Bereiche stärkerer Strömung werden hierdurch in Bereiche mit schwächerer Strömung geleitet und vermischen sich mit dieser, so dass insgesamt ein weitgehend gleichmäßiges Strömungsprofil entsteht. Dies ist insbesondere im Bereich der Strömungskonditionierung zwischen dem Gebläse und dem Heizungselement vorteilhaft, kann aber auch zwischen Heizstab und Sorptionseinheit Vorteile bringen.

Vorzugsweise weist die Sorptionseinheit ein Zeolithfestbett (=Molekularsieb) auf, das an seiner Eintrittsfläche sowie Austrittsfläche jeweils von einem Sieb begrenzt ist.

Weist die Sorptionseinheit über die Durchtrittsfläche der Luftströmung eine unterschiedliche Schichtdicke auf, welche zumindest teilweise die Strömungskonditionierungseinrichtung bildet, so kann beispielsweise bei über die Eintrittsquerschnittsfläche ungleichmäßig verteilter Lufteinströmung eine größere Schichtdicke an Stellen gewählt werden, an denen ein größerer Volumenstrom eintritt, um das dehydrierbare Material besser ausnutzen zu können. Beispielsweise kann die Schicht im Querschnitt trapezförmig gewählt werden, wenn an einem Ende ein geringerer Volumenstrom eintritt als an dem anderen Ende der Schicht.

Vorteilhafterweise ist die Sorptionseinheit an ihrem Lufteintritt und/oder Luftaustritt von einem Sieb begrenzt. Damit wird das reversibel dehydrierbare Material einerseits an der vorgesehenen Stelle in der Sorptionseinrichtung gehalten und andererseits wird der Luftstrom durch die Sorptionseinheit nicht oder gegebenenfalls in beabsichtigter Weise beeinflusst. Das Sieb kann hierfür mit sehr kleinen Drähten als Maschennetz gebildet sein. Er kann aber auch zum Beispiel eine Lochplatte mit gleichen oder mit unterschiedlichen Lochformen oder Lochgrößen sein. Der Volumenstrom durch das reversibel dehydrierbare Material kann hierdurch in gezielter Weise beeinflusst werden. Sind Sieböffnungen des Siebes unterschiedlich groß ausgebildet, bildet das Sieb zumindest teilweise die Strömungskonditionierungseinrichtung, indem es die Strömung vor bzw. nach dem Sieb bzgl. beispielsweise der Strömungsgeschwindigkeit, der Strömungsrichtung, und/ oder des Volumenstromes verändert. Es können auch am Eingang und am Ausgang der Sorptionseinrichtung unterschiedliche Siebe verwendet werden, um die Strömung, zum Beispiel durch einen gezielten Rückstau, zu beeinflussen.

Weist die Sorptionseinheit über die Durchtrittsfläche der Luftströmung eine gleiche Schichtdicke auf, so wird insbesondere bei einer gleichmäßig in die Sorptions-einheit einströmenden Luftströmung das in der Sorptionseinheit befindliche Material auch pro Volumeneinheit gleichmäßig mit Luft beaufschlagt.

Ist die Heizung insbesondere als Heizstab oder eine Drahtwendelheizung ausgebildet, so wird durch das Vorbeiströmen der aus dem Gebläse kommenden Luft ein sehr schnelles Erwärmen der Luft ermöglicht, insbesondere wenn sie in Strömungsrichtung angeordnet ist. Die Luftströmung kann hierdurch relativ lange Kontakt mit der Heizung haben und es besteht dadurch genügend Zeit, um die Luft auf die erforderliche Temperatur aufzuheizen.

Umfasst die Heizung insbesondere eine Drahtwendelheizung und ist diese konisch ausgebildet, so erfolgt hierdurch gleichzeitig zumindest eine teilweise Konditionierung der Strömung. Die Luft strömt durch die konisch ausgebildete Drahtwendelheizung und wird hierdurch sowohl in ihrer Strömungsrichtung als auch in ihrem Strömungsprofil vergleichmäßigt und gleichzeitig auf die erforderliche Temperatur aufgeheizt.

Ist die Heizung insbesondere in einem Rohr angeordnet, so wird in vorteilhafter Weise bewirkt, dass die Strömung eng an der Heizung anliegt und an dieser entlang strömt. Der Wärmeübergang von der Heizung auf die Luft wird hierdurch besonders schnell und wirkungsvoll erzielt.

Zweckmäßig kann es sein, wenn das Rohr, in dem sich die Heizung befindet, in seinem Querschnitt in Strömungsrichtung verjüngt ausgebildet ist, so dass der Luftstrom isotherm erwärmt und die Heizung zwangsbeströmt wird. Hierdurch wird eine hohe Strömungsgeschwindigkeit erzielt, welche den Wärmeübergang vorteilhaft beeinflusst.

Weist das Rohr, in dem sich die Heizung befindet, an seinem Ende und/oder seiner Oberseite ein oder mehrere Luftaustritte auf, so wird die Luft relativ lange an der Heizung entlang geführt und entfernt sich erst, nachdem sie die erforderliche Temperatur angenommen hat von der Heizung. Durch den Luftaustritt am Ende und/oder an der Oberseite des Rohres wird die Luft, gegebenenfalls mit entsprechenden zusätzlichen Strömungsumlenkungseinrichtungen, auf die Sorptionseinheit gelenkt, so dass die Sorptionseinheit gleichmäßig durchströmt werden kann.

Ist nach einer weiteren zweckmäßigen Weiterbildung über und/oder unter der Heizung ein Loch- oder Schlitzblech angeordnet, so kann hierdurch wiederum in vorteilhafter Weise insbesondere die Strömung derart konditioniert werden, dass eine entsprechende gleichmäßige Strömung durch die Sorptionstrocknungsvorrichtung, insbesondere Sorptionseinheit erzielt wird. Die Strömung wird dabei im Idealfall mit gleicher Temperatur und gleicher Geschwindigkeit auf die gesamte Fläche der Sorptionseinheit geleitet, so dass die Dehydrierung der Sorptionseinheit vollständig, schnell und gleichmäßig erfolgt.

Vorzugsweise sind der Abstand des Loch- oder Schlitzbleches von der Heizung und/oder die Größe der Löcher oder Schlitze so gewählt, dass die Sorptionseinheit gleichmäßig angeströmt ist. In Abhängigkeit von den baulichen Gegebenheiten des Gebläses, der Strömungsleitung, der Heizung, des Gehäuses der Sorptionstrocknungsvorrichtung sowie deren Sorptionseinheit selbst wird der Abstand des Loch- oder Schlitzbleches von der Heizung und/oder die Größe der Löcher oder Schlitze insbesondere derart gewählt, dass die Strömung gleichmäßig durch die Sorptionstrocknungsvorrichtung, insbesondere Sorptionseinheit, hindurchgeleitet werden kann. Die Größe der Löcher sowie der Abstand des Loch- oder Schlitzbleches von der Heizung können im Verlauf der Strömung auch unterschiedlich sein. So ist es beispielsweise möglich, dass im Verlauf der Strömung entlang der Heizung der Abstand des Loch- oder Schlitzbleches von der Heizung verringert und/oder die Größe der Löcher oder Schlitze vergrößert sind im Vergleich zum Beginn der Strömung an der Heizung.

Vorzugsweise sind an der Heizung insbesondere Lamellen zur Strömungskonditionierung und/oder Oberflächenvergrößerung der Heizung angeordnet. Hierdurch ist es möglich, die Effektivität der Heizung zu vergrößern. Die Kontaktfläche der Heizung zu der Luft wird hiermit vergrößert und der Wärmeübergang kann schneller erfolgen. Gleichzeitig ist durch die Lamellen eine Ausrichtung und Vergleichmäßigung der Strömung, d. h. eine Strömungskonditionierung, möglich, so dass wiederum die Sorptionseinheit gleichmäßig durchströmt werden kann.

Vorstehende Ausführungsvarianten und/oder die in den Unteransprüchen wiedergegeben Weiterbildungen beziehen sich auf alternative Heizungskonzepte insbesondere zur Desorption eines Sorptionssystems. Dieses umfasst als eine sogenannte Sorptionskolonne eine Sorptioneinheit mit reversibel dehydrierbaren Sorptionsmaterial und mindestens eine der Sorptionseinheit zugeordnete Heizung. Diese ist in Strömungsrichtung vorzugsweise vor der Eintrittsfläche der Sorptionseinheit angeordnet und funktioniert als sogenannte Luftheizung. Ein vorzugsweise isothermes Aufheizen möglichst vieler, vorzugsweise aller Stellen der Sorptionseinheit wird insbesondere durch eine gleiche Strömungsgeschwindigkeit über den Strömungsquerschnitt der Sorptionseinheit ermöglicht. Die Prinzipien hierfür sind zum einen eine Strömungskonditionierung insbesondere zwischen Gebläse und Sorptionseinheit bzw. zwischen Gebläse und Behälter der Sorptionseinheit hinsichtlich des Strömungsvolumenprofils bezogen auf die Eintrittsquerschnittsfläche der Sorptionseinheit und zum anderen eine Strömungskonditionierung in der Sorptionskolonne bzw. Sorptionstrocknungsvorrichtung durch eine Luftführung an und um die Heizung.

In analoger Weise verhelfen die ein oder mehreren Strömungskonditionierungsmittel dem erfindungsgemäßen Geschirrspüler auch zu einer Verbesserung beim Sorptionsvorgang, wie er z.B. beim Trocknungsschritt eines Geschirrspülprogramms durchgeführt wird. Dabei ist das Heizungselement der Sorptionstrocknungsvorrichtung üblicherweise ausgeschaltet und ein feuchter Luftstrom wird aus dem Innenraum des Spülbehälters zur Entfeuchtung durch das Sorptionsmaterial der Sorptionseinheit vorzugsweise unter Zuhilfenahme mindestens eines Gebläses geblasen.

Eine unkonditionierte Anströmung der Heizung kann insbesondere durch ein ungleichmäßiges Strömungsprofil am Austritt des Gebläses und durch eine ungleichmäßige Strömungsverteilung innerhalb der Sorptionskolonne bzw. Sorptionstrocknunsgvorrichtung entstehen. Dies ergibt eine ungleichmäßige Strömungsgeschwindigkeit und damit eine ungleichmäßige Temperaturverteilung über den Heizungs- und Festbettquerschnitt mit "Hot Spots" und kalten Stellen. Findet eine Strömungskonditionierung zwischen dem Gebläse und der Sorptionskolonne bzw. Sorptionseinrichtung statt, so ist dies beispielsweise mittels einer Konditionierung durch eine Lochstruktur, z. B. ein Lochblech, möglich. Eine variable Gestaltung der Öffnungen kann zur Verbesserung führen. Außerdem ist eine Konditionierung durch Umlenkbleche möglich, welche ebenfalls zu einer Verbesserung der Strömung führen können.

Eine Strömungskonditionierung in der Sorptionskolonne bzw. Sorptionseinrichtung kann insbesondere über mindestens ein Lochblech/Schlitzblech stattfinden. Vorzugsweise über und unter der Heizung kann dazu ein Loch- oder Schlitzblech angeordnet sein. Die gleichmäßige Anströmung der Heizung kann durch eine geeignete Wahl der Abstände des Loch- oder Schlitzbleches von der Heizung und/oder über den Loch- bzw. Schlitzdurchmesser erreicht werden.

Eine Oberflächenvergrößerung des Heizungselements kann insbesondere durch eine Lamellenstruktur wie bei einer Heatpipe erfolgen. Die Lamellen sind dabei auf dem Heizungselement wie z.B. einem Heizstab aufgebracht, wodurch eine thermische und mechanische Anbindung der Lamellen an das Heizungselement wie z.B. einen Heizstab erfolgt. Vorzugsweise sind die Lamellen in Strömungsrichtung angeordnet. Durch die Lamellen entsteht eine Oberflächenvergrößerung der Heizung.

Ist eine Drahtwendelheizung zwischen Lüfter und Sorptionskolonne bzw. Sorptionseinrichtung positioniert, so kann, insbesondere wenn diese konisch ausgeführt ist, eine gleichmäßige Erwärmung der Luft über den Querschnitt und über die Heizungslänge erfolgen. Vorteil hierbei ist, dass eine Überhitzung des Drahtes weitgehend vermieden wird. Vorzugsweise ist die Drahtwendelheizung außerhalb des Zeolithbehälters der Sorptionseinheit angeordnet und führt durch erwärmten Luftstrom zur gleichmäßigen, isothermen Erwärmung des Festbettes der Sorptionseinheit.

Ist die Heizung in einem Rohr angeordnet, so kann sich insbesondere bei einer Querschnittsverengung des Rohres eine Zwangsbeströmung der Heizung mit einer hohen Strömungsgeschwindigkeit erfolgen. Dadurch kann der Luftstrom vorzugsweise isotherm erwärmt werden. Am Ende des Rohres und/oder zumindest teilweise oben kann die erwärmte Luft austreten und über die Umlenkung gleichmäßig über das Festbett verteilt werden.

Sonstige Weiterbehandlungen der Erfindung sind in den Unteransprüchen wiedergegeben.

Die Erfindung und ihre Weiterbehandlungen werden nachfolgend anhand von Zeichnungen näher erläutert:
Es zeigen:
   - Figur 1: schematisch eine Geschirrspülmaschine mit einem Spülbehälter und einem Sorptionstrocknungssystem, das eine Sorptionstrocknungsvorrichtung mit mindestens einem Heizungselement und einer Sorptioneinheit nach dem erfindungsgemäßen Konstruktionsprinzip aufweist,
   - Figur 2: in schematischer Längsschnittdarstellung ein erstes vorteilhaftes Ausführungsbeispiel eines erfindungsgemäßen Strömungskonditionierungsmittels mit einer Lochstruktur im Luftführungskanal für die Sorptionstrocknungvorrichtung des Sorptionstrocknungssystems von Figur 1,
   - Figur 3: in schematischer Längsschnittdarstellung ein zweites vorteilhaftes Ausführungsbeispiel eines erfindungsgemäßen Strömungskonditionierungsmittels mit Umlenkblechen im Luftführungskanal für die Sorptionstrocknungsvorrichtung des Sorptionstrocknungssystems von Figur 1,
   - Figur 4: in schematischer Längsschnittdarstellung ein drittes Ausführungsbeispiel eines erfindungsgemäßen Strömungskonditionierungsmittels mit Loch- bzw. Schlitzblechen unterhalb und oberhalb eines Heizungselements im Gehäuse der Sorptionstrocknungsvorrichtung des Sorptionstrocknungssystems der Geschirrspülmaschine von Figur 1,
   - Figur 5: in schematischer Längsschnittdarstellung ein weiteres Ausführungsbeispiel eines erfindungsgemäßen Strömungskonditionierungsmittels für die Sorptionseinheit der Sorptionstrockungsvorrichtung des Sorptionstrocknungssystems der Geschirrspülmaschine von Figur 1 mit Anordnung eines Heizungselements in einem Rohr,
   - Figur 6: in schematischer Längsschnittdarstellung ein weiteres, gegenüber den Figuren 2 mit 5 abgewandeltes Strömungskonditionierungsmittel mittels einer Drahtwendelheizung,
   - Figur 7: in schematischer Längsschnittdarstellung eine weitere, vorteilhafte Ausführungsvariante eines erfindungsgemäßen Strömungskonditionierungsmittels mittels einer Lamellenstruktur auf einem Heizstab,
   - Figur 8: in schematischer Längsschnittdarstellung eine vorteilhafte Ausführungsvariante eines Strömungskonditionierungsmittels mittels eines ungleich dicken reversibel dehydrierbaren Materials in der Sorptionseinheit der Sorptionstrocknungsvorrichtung der Geschirrspülmaschine von Figur 1, und
   - Figur 9: in schematischer Draufsichtsdarstellung ein Heizungselement, das mäanderförmig in einer gemeinsamen, planen Lageebene unterhalb der Sorptionseinheit im Gehäuse der Sorptionstrocknungsvorrichtung des Sorptionstocknungssystems der Geschirrspülmaschine von Figur 1 ausgelegt ist.

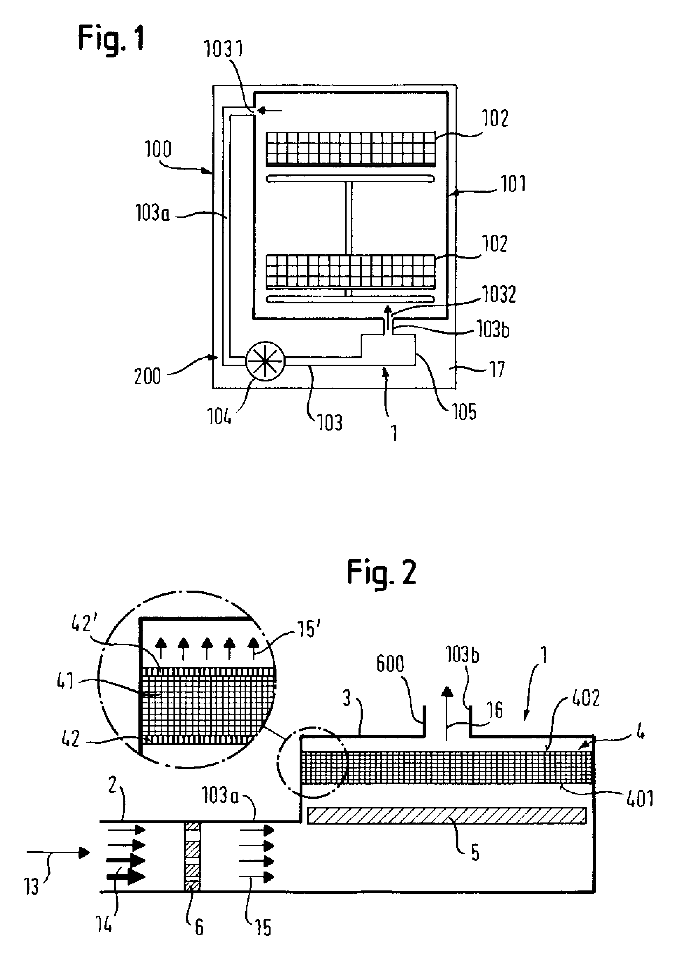

Elemente mit gleicher Funktion und Wirkungsweise sind in den Figuren 1 mit 9 jeweils mit denselben Bezugszeichen versehen.

Figur 1 zeigt schematisch eine Geschirrspülmaschine 100 mit einem Spülbehälter 101 und einem Sorptionstrocknungssystem 200. Dieses ist vorzugsweise extern, d.h. außerhalb des Spülbehälters 101 der Geschirrspülmaschine 100 vorgesehen. Es umfasst als Hauptkomponenten einen Luftführungskanal 103, mindestens ein Gebläse bzw. einen Lüfter 104 sowie eine Sorptionstrocknungsvorrichtung 105, 1. In dem Spülbehälter 101 sind beispielsweise ein oder mehrere Gitterkörbe 102 zur Aufnahme und zum Spülen von Geschirrstücken untergebracht. Die Sorptionstrocknungsvorrichtung 105, 1 ist über den Luftführungskanal 103 mit mindestens einem Auslass 1031 und mit mindestens einem Einlass 1032 des Spülbehälters 101 verbunden. Dabei ist der Luftführungskanal 103 weitgehend außerhalb des Spülbehälters 101 angeordnet. Im Einzelnen ist der einlassseitige Rohrabschnitt 103a des Luftführungskanals 103 an dem Auslass 1031 des Spülbehälters 103 in dessen deckennahem Bereich angeschlossen. Der auslassseitige Rohrabschnitt 103b des Luftführungskanals 103 führt zu dem Einlass 1032 des Spülbehälters 103 in dessen bodennahem Bereich. Auf diese Weise kann Luft aus dem Inneren des Spülbehälters 101 über den Luftführungskanal 103 zur Sorptionstrocknungsvorrichtung 1 z.B. während eines Trocknungsschritts eines Geschirrspülprogramms und von dieser getrocknet zurück in den Spülbehälter 101 geführt werden, d.h. durch die Sorptionstrocknungsvorrichtung 105, 1 zirkulieren. Durch den Lufteinlass im oberen Bereich des Spülbehälters 101 ist weitgehend vermieden, dass Wasser aus dem Sumpf im Boden des Spülbehälters oder aus dessen Wassersprühsystem (der Übersichtlichkeit halber weggelassen) in den Luftführungskanal sowie in die Sorptionstrocknungsvorrichtung gelangen kann, was dort ansonsten das Sorptionsmaterial unzulässig feucht und unbrauchbar machen würde.

Die Sorptionstrocknungsvorrichtung 1 ist hier im Ausführungsbeispiel in vorteilhafter Weise in einer Bodenbaugruppe unterhalb des Bodens des Spülbehälters 100 untergebracht. Sie ist als sogenannte Sorptionskolonne ausgebildet. Diese umfasst in einem gemeinsamen Gehäuse bzw. Behälter 3 mindestens ein Heizungselement 5 (siehe Figur 2) und eine in Strömungsrichtung nachgeordnete Sorptionseinheit 4 (siehe Figur 2), die mit einem reversibel dehydrierbaren Sorptionsmaterial wie z.B. Zeolith bestückt ist. Die Sorptionseinheit 4 enthält insbesondere ein Sorptionsmaterial-Festbett, vorzugsweise Zeolithfestbett, als Molekularsieb oder eine lose Sorptionsmaterialschüttung, vorzugsweise Zeolithschüttung. Eine Sorptionsmaterialschüttung, insbesondere Zeolithschüttung, ist insbesondere durch loses Granulat oder sonstige Teilchen, vorzugsweise Zeolithteilchen, bevorzugt in Kügelchenform gebildet. Das Trockenmaterial bzw. Sorptionsmaterial ist vorzugsweise als ein oder mehrlagige Schicht mit weitgehend gleicher Schichtdicke im Behälter oder Gehäuse 3 der Sorptionstrocknungsvorrichtung 1 im Zwischenraum zwischen zwei mit einem Spaltfreiraum voneinander in Höhenrichtung beabstandeten Sieben bzw. Lochgittern 42, 42' unter Bildung der Sorptionseinheit 4 untergebracht. Dabei sind die beiden Siebe 42, 42' im vorgebbaren Höhenabstand voneinander parallel sowie deckungsgleich zueinander in horizontalen Lageebenen angeordnet. Jedes Sieb ist dabei im Wesentlichen planflächig bzw. eben ausgebildet. Beide Siebe sind ringsum ihren Außenumfang an ihren Außenrändern vom Außenmantel des Gehäuses 3 als Außenbegrenzung umfasst bzw. umhüllt. Die Sorptionseinheit 4 ist im Gehäuse 3 der Sorptionstrocknungsvorrichtung 105, 1 somit in einer im Wesentlichen horizontalen Lageebene angeordnet. Auf diese Weise ist die Sorptionseinheit 4 an ihrer Lufteintrittsöffnung und/oder Luftaustrittsöffnung jeweils vorzugsweise von mindestens einem Sieb oder Gitter begrenzt bzw. abgedeckt, so dass Sorptionsmaterialteilchen, insbesondere Zeolithteilchen, am Herausfallen aus dem Behälter der Sorptionseinheit gehindert sind und gleichzeitig Luft durch das Innere des Sorptionsmaterials von der Lufteintrittsöffnung zur Luftaustrittsöffnung hindurchströmen kann. Die Sorptionseinheit 4 weist vorzugsweise eine weitgehend planflächige eingangsseitige Einströmfläche und weitgehend planflächige ausgangsseitige Ausströmfläche auf. Auf praktikable Weise ist durch eine derartige Sorptionseinheit eine kompakte Lagerung des Sorptionsmaterials bei gleichzeitig ausreichender Luftdurchgängigkeit ermöglicht, so dass das Sorptionsmaterial für einen Sorptionsvorgang sowohl Feuchtigkeit aus durchströmender Luft durch Kondensation ausreichend absorbieren als auch für einen Desorptionsvorgang zur Regeneration des Sorptionsmaterials gespeicherte Feuchtigkeit durch Erhitzen an durchströmende Luft wieder abgeben bzw. desorbieren kann.

Anstelle einer gemeinsamen Außenwand mit der Sorptionstrocknungsvorrichtung 1 kann die Sorptionseinheit 4 selbstverständlich auch ein eigenes Außengehäuse aufweisen, das die beiden voneinander beabstandeten Siebe mit dem dazwischen eingefüllten Sorptionsmaterial einschließt.

Das Gehäuse 3 der Sorptionstrocknungsvorrichtung 105, 1 ist derart geformt und unterhalb des Bodens des Spülbehälters 101 positioniert, dass es von einer im Wesentlichen vertikalen Luftströmung 16 durchströmt werden kann. Das heißt, es erlaubt eine Durchzugsrichtung durch seine integrierte Sorptionseinheit 4 von unten nach oben. Zur Luftzufuhr mündet der stromabwärtsseitige Endabschnitt des einlassseitigen Rohrabschnitts 103a des Luftführungskanals 103 in das Gehäuse 3 der Sorptionstrocknungsvorrichtung 105, 1 im Bereich dessen Gehäusegrunds oder Gehäusebodens ein. Hier im Ausführungsbeispiel verläuft der stromabwärtsseitige Endabschnitt des einlassseitigen Rohrabschnitts 103a im Wesentlichen in einer horizontalen Lageebene auf den Grund des Gehäuses 3 der Sorptionstrocknungsvorrichtung 1 zu. Er ist dabei im Wesentlichen fluchtend mit dem Unterboden des Gehäuses 3 verbunden. Er ist derart an das Gehäuse 3 bodennah angekoppelt, dass eine in ihm geführte Luftströmung aus einer ursprünglich etwa horizontalen Durchströmungsrichtung 13 in eine etwa vertikal verlaufende Durchströmungsrichtung 16 durch das Gehäuse 3, hier etwa um 90°, umgelenkt wird. Allgemeiner ausgedrückt wird eine im einlassseitigen Rohrabschnitt 103a ankommende Luftströmung 14 aus ihrer ursprünglichen Einströmungsrichtung 13 im bodennahen Bereich bzw. im Bereich des Kammergrunds des Gehäuses 3 in dessen Durchströmungsrichtung 16 umgelenkt. Die Durchströmungsrichtung 16 durch das Gehäuse 3 ist hierbei insbesondere eine Strömungsrichtung, die das Gehäuse im Wesentlichen geradlinig vom geschlossenen Gehäusegrund zu einer deckenseitigen Auslassöffnung bzw. zu einem Auslassstutzen 600 in der Decke des Gehäuses 3 durchläuft, an den der stromaufwärtsseitige Endabschnitt des auslassseitigen Rohrabschnitts 103b des Luftführungskanals 101 angeschlossen ist. Bei einer derartigen Durchströmungsrichtung wird die horizontal gelagerte Schicht mit dem Sorptionsmaterial in der Sorptionseinheit 4 von einer hindurchziehenden Luftströmung im Wesentlichen senkrecht durchdrungen bzw. durchsetzt.

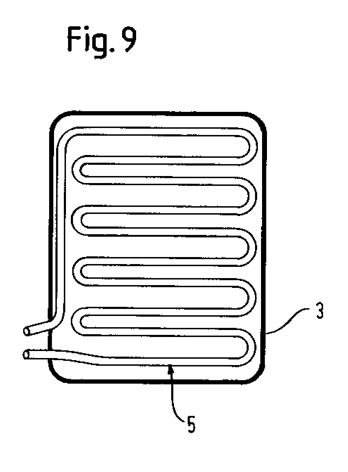

Zur Desorption des reversibel dehydrierbaren Sorptionsmaterials 41 der Sorptionseinheit 4 ist im Gehäuse 3 mindestens ein Heizungselement 5 im Nahbereich vor der Eintrittsfläche der Sorptionseinheit 4 vorgesehen, um eine Luftaufheizung für das Sorptionsmaterial 41 bereitzustellen. Dabei ist das Heizungselement 5 in einer Lageebene vor der Eintrittsfläche positioniert, die von dieser einen vorgebbaren Spaltabstand zur Vermeidung von lokalen Überhitzungen des Sorptionsmaterials 41 an dessen Eingangsoberfläche aufweist und im Wesentlichen parallel zu dieser verläuft. Das Heizungselement 5 ist vorzugsweise durch einen Heizstab oder eine Heizwendel gebildet. Insbesondere erstreckt sich das jeweilige Heizungselement 5 im Wesentlichen über die gesamte lichte Weite der Eintrittsquerschnittsfläche der Sorptionseinheit 4 mit dem reversibel dehydrierbaren Trockenmaterial 41. Dadurch ist es möglich, die Luftströmung auch im Bereich der sich in Tiefenrichtung erstreckenden Längswände, d.h. insbesondere an den Seitenrändern, der Sorptionseinheit 4 genauso wie im Mittenbereich der Querschnittsbreite der Sorptioneinheit 4 aufzuheizen. Dadurch sind lokale Feuchtstellen im Trockenmaterial 41 insbesondere im Bereich der Seitenwände der Sorptionseinheit 4 bei der Desorption weitgehend vermieden. Wenn die Breite der Sorptionseinheit 4 im Wesentlichen der Innenbreite des Gehäuses 3 der Sorptionstrocknungsvorrichtung 1 entspricht, verläuft das Heizungselement 5 vor der Eintrittsquerschnittsfläche der Sorptionseinheit vorzugsweise im Wesentlichen über die gesamte Innenbreite des Gehäuses 3 der Sorptionstrocknungsvorrichtung 1. Um die Eintrittsquerschnittsfläche der Sorptionseinheit 4 zur Desorption dessen Sorptionsmaterialvolumens möglichst vollflächig und damit weitgehend homogen aufheizen zu können, so dass lokale Aufheizungslücken im Sorptionsmaterialvolumen weitgehend vermieden sind, ist das Heizungselement 5 in Tiefenrichtung der Sorptionseinheit, insbesondere des Gehäuses, der Sorptionstrocknungsvorrichtung betrachtet vorzugsweise schlangenlinienförmig bzw. mäanderförmig verlegt, wie dies im Draufsichtsbild von Figur 9 im geöffneten Zustand der Sorptionstrocknungvorrichtung 1 veranschaulicht ist. Die Mäanderwindungen des Heizungselements verlaufen vorzugsweise über die volle Innenbreite der Eintrittsfläche der Sorptionseinheit 4 zwischen den beiden Seitenwänden des Gehäuses 3 der Sorptionstrocknungsvorrichtung 1 in Tiefenrichtung hin und her. Insbesondere liegen dabei die Windungen des Heizungselements 5 in etwa derselben Lageebene.

Zur Erzeugung einer Luftströmung 14 durch den Luftführungskanal 103 ist in Strömungsrichtung betrachtet im einlassseitigen Rohrabschnitt 103a vor der Sorptionseinheit 4 der Sorptionstrocknungsvorrichtung 105, 1 das Gebläse 104 vorgesehen, welches über den Luftkanalquerschnitt des Luftführungskanals 103 betrachtet eine ungleichmäßige Luftströmung erzeugt.

Zusammenfassend betrachtet führt also ausgehend von dem Spülbehälter 101 der Luftführungskanal 103 zu der Sorptionstrocknungsvorrichtung 1 hin und von dort wieder zurück in den Spülbehälter 101. Vor der Sorptionstrocknungsvorrichtung 1 ist in dem Luftführungskanal 103 das Gebläse 104 angeordnet, mit welchem Luft aus dem Spülbehälter 101 angesaugt und durch die Sorptionstrocknungsvorrichtung 1 in den Spülbehälter zurück geblasen wird. In der Sorptionstrocknungsvorrichtung 1 wird einerseits die angesaugte Luft getrocknet, indem das darin befindliche reversibel dehydrierbare Sorptionsmaterial Feuchtigkeit aufnimmt, und andererseits wird das Sorptionsmaterial in bestimmten zeitlichen Abständen mit Hilfe mindestens eines Heizungselements wieder getrocknet, also dehydriert, um wieder zur Feuchtigkeitsaufnahme aus der Luft aufnahmebereit gemacht zu werden.

Um nun das reversibel dehydrierbare Sorptionsmaterial möglichst effektiv bei der Sorption und/oder insbesondere vor allem bei der Desorption zu unterstützen und den Wirkungsgrad des Materials im Vergleich zu herkömmlichen Sorptionstrocknungsvorrichtungen zu steigern, ist im Luftwegverlauf des Luftstromes zwischen dem Gebläse und der Lufteintrittsfläche der Sorptionseinheit mindestens ein Strömungskonditionierungsmittel zur Vergleichmäßigung des Strömungsquerschnittsprofils der Luftströmung beim Durchströmen der Sorptionstrocknungsvorrichtung vorgesehen. In Strömungsrichtung betrachtet sind nach dem Gebläse die ein oder mehreren Strömungskonditionierungsmittel vor dem Eintritt der Luftströmung in die Sorptionseinheit der Sorptionstrocknungsvorrichtung vorgesehen. In der Figur 2 ist beispielsweise das Strömungskonditionierungsmittel 6 im Einmündungsbereich des vom Gebläse 104 kommenden, einlassseitigen Rohrabschnitts 103a des Luftführungskanals 103 in das Gehäuse 3 der Sorptionstrocknungsvorrichtung 1 eingefügt.

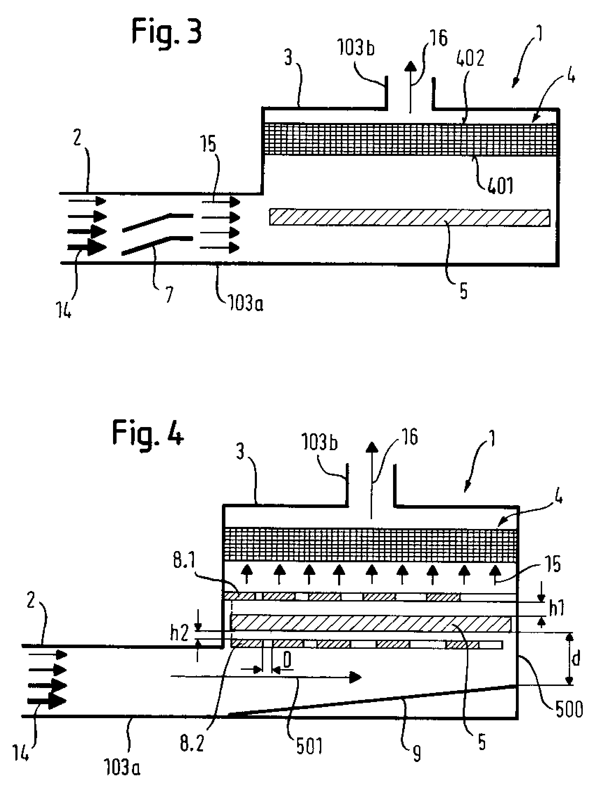

Alternativ dazu kann das jeweilige Strömungskonditionierungsmittel auch im Gehäuse 3 der Sorptionstrocknungsvorrichtung 1 als Bestandteil untergebracht sein. So sind beispielsweise in der Ausführungsvariante von Figur 4 Strömungskonditionierungsmittel 8.1, 8.2 im Gehäuse 3 im Nahbereich vor der Sorptionseinheit 4 zusammen mit deren zugehörigem Heizungselement 5 integriert.

In der Figur 2 ist die Sorptionstrocknungsvorrichtung 1 des Sorptionstrocknungssystems 200 als Einzelheit der Geschirrspülmaschine 100 von Figur 1 zusammen mit dem einlassseitigen Rohrabschnitt 103a sowie dem auslassseitigen Rohrabschnitt 103b des Luftführungskanals 103 schematisch im Längsschnitt dargestellt. Der Spülbehälter 101 sowie weitere Komponenten bzw. Bauteile der Geschirrspülmaschine 101 sind der Übersichtlichkeit halber weggelassen worden. In diesem Ausführungsbeispiel wird im Gehäuse 3 der Sorptionstrocknungsvorrichtung 1 im Nahbereich vor der Eintrittsfläche der Sorptionseinheit 1 eine dazu senkrecht zugeführte Luftströmung mittels einer Heizung, hier einem Heizstab, aufgeheizt.

Im Bodenbereich des Gehäuses 3 der Sorptionstrocknungsvorrichtung 1 mündet der einlassseitige Rohrabschnitt 103a des Luftführungskanals 103 luftleitend vom Auslass 1031 des Spülbehälters 101 kommend ein. Der einlassseitige Rohrabschnitt 103a weist entsprechend der Figur 1 zur Luftzirkulation von Luft aus dem Innenraum des Spülbehälters 101 über die Sorptionstrocknungsvorrichtung 1 sowie dem daran anschließenden auslassseitigen Rohrabschnitt 103b zurück in den Spülbehälter 101 in seinem Längsverlauf das Gebläse 104 auf, welches über den Luftkanalquerschnitt des Luftführungskanals 103 betrachtet eine ungleichmäßige Luftströmung 14 erzeugt. Diese ist durch ungleiche, verschieden dicke Pfeile bezogen auf eine Durchströmungsfläche des einlassseitigen Rohrabschnitts 103a an einer Längsstelle 2 vor dessen Strömungseintrittsbereich bzw. Mündungsbereich in das Gehäuse 3 der nachgeordneten Sorptionstrocknungsvorrichtung 1 dargestellt. Bevor diese ungleichmäßige Strömung 14 in das Gehäuse 3 der Sorptionstrocknungsvorrichtung 1 einmündet, ist in Strömungsrichtung betrachtet hinter dem Gebläse 104 im Einmündungsbereich des einlassseitigen Rohrabschnitts 103a noch vor dessen bodennahen Eintrittsöffnung in das Gehäuse 3 der Sorptionstrocknungsvorrichtung 1 das Strömungskonditionierungsmittel 6 eingefügt. Im vorliegenden Ausführungsbeispiel ist das Strömungskonditionierungsmittel 6 durch eine Struktur mit einer Vielzahl von über die Kanalquerschnittsfläche verteilt angeordneten Luftdurchlässen bzw. Durchtrittsöffnungen wie zum Beispiel eine Lochstruktur, hier ein Lochblech, gebildet, durch welches die vom Gebläse 104 ankommende, ungleichmäßige Luftströmung 14 vergleichmäßigt wird. Mit dieser über den Querschnitt des einlassseitigen Rohrabschnitts 103 des Luftführungskanals 103a vergleichmäßigten Luftströmung 15, die in der Figur 2 durch gleich dick eingezeichnete Pfeile hinter dem Lochblech angedeutet ist, wird das Heizungselement 5 vor der Sorptionseinheit 4 beströmt. Das Lochblech 6, welches in der Figur 2 als Prinzipskizze dargestellt ist, weist hier im Ausführungsbeispiel unterschiedliche Öffnungen derart auf, dass Strömungszonen der Luftströmung, welche stärker sind, einem höheren Widerstand als Strömungsbereiche der Luftströmung ausgesetzt werden, welche schwächer sind. Allgemeiner ausgedrückt sind dazu vorzugsweise dem oder mehreren der stärkeren Strömungsbereiche der Luftströmung bezogen auf den jeweiligen Strömungsquerschnitt Durchlässe mit kleinerer Durchgangsfläche zugeordnet als den ein oder mehreren schwächeren Strömungsbereichen der Luftströmung. Hierdurch ist eine Konditionierung der Luftströmung dahingehend möglich, dass nach dem Lochblech die Strömung über den Querschnitt des Luftführungskanals 103 weitgehend vergleichmäßigt ist. Anstelle des Lochbleches 6 ist es vorteilhafterweise auch möglich, ein Lochgitter oder ein Schlitzblech anzuordnen. Die jeweilige Wahl eines bevorzugten Mittels zur Strömungskonditionierung hängt insbesondere von den baulichen Gegebenheiten und beispielsweise auch von dem verwendeten Gebläse ab. Durch die Strömungskonditionierung ist sichergestellt, dass die an den verschiedenen Abschnitten des Heizungselements 6 vorbeiströmende Luft weitgehend isotherm aufgeheizt wird, d.h. es erfolgt im wesentlichen an allen Stellen in der Lageebene des Heizungselements 6 weitgehend derselbe Wärmeübertrag vom Heizungselement 6 auf die vorbeiströmende Luftströmung 15, so dass diese an jeder Stelle der Lufteintrittsfläche der Sorptionseinheit 4 weitgehend gleichmäßig aufgeheizt, d.h. etwa mit derselben Einströmtemperatur ankommt und in diese einströmt. Auf diese Weise kann bezogen auf die jeweilige Durchströmungsquerschnittsfläche der Sorptionseinheit eine weitgehend homogene Aufheizung dessen Sorptionsmaterials zu dessen Desorption bewirkt werden.

Zusammenfassend betrachtet ist hier im Ausführungsbeispiel von Figur 2 im einlassseitigen Rohrabschnitt 103a des Luftführungskanals in Strömungsrichtung betrachtet nach dem Gebläse 104 oder im Gehäuse 3 der Sorptionstrocknungsvorrichtung 1 vor dem Heizungselement 5 deren Sorptionseinheit 4 eine Einrichtung zur Strömungskonditionierung vorgesehen, um die Luftströmung 14 aus dem Gebläse 104 zu konditionieren, damit sie möglichst gleichmäßig aufgeheizt und gleichmäßig durch die Sorptionseinheit 4 hindurchgeführt werden kann. In einem vergrößerten Ausschnitt der Sorptionseinheit 4 ist in Figur 2 deren beispielhafter Aufbau näher dargestellt. Daraus ist ersichtlich, dass das reversibel dehydrierbare Material 41 zwischen den zwei Sieben 42, 42' angeordnet ist. Die Siebe 42, 42' weisen Luftdurchtrittsöffnungen auf, welche je nach Bedarf geformt sein können. Sie können einen mehr oder weniger großen Strömungswiderstand einerseits für den Durchtritt der konditionierten Luftströmung 15 bilden und andererseits das Sorptionsmaterial 41 in dem vorgesehenen Ort des Gehäuses 3 halten, so dass es nicht durch die Luftströmung beispielsweise mitgerissen oder beschädigt wird. Auch im Falle, dass es sich bei dem Sorptionsmaterial 41 um Granulat handelt, wird es durch die Siebe 42, 42' entsprechend an dem vorgesehen Ort gehalten. Die Luftströmung 15 strömt im Idealfall als gleichmäßiger Volumenstrom pro Flächen- und/oder Volumeneinheit durch die Sorptionseinheit 4 hindurch, so dass sie auch nach dem Durchtritt als gleichmäßige Luftströmung 15' aus der Austrittsfläche der Sorptionseinheit 4 in den auslassseitigen Rohrabschnitt 103b des Luftführungskanals 103 austritt.

Alternativ zur hier im Ausführungsbeispiel von Figur 2 aufgezeigten Positionierung des Strömungskonditionierungsmittels vor dem Gehäuse 3 kann es insbesondere besonders vorteilhaft sein, wenn das Strömungskonditionierungsmittel 6 im Gehäuse 3 unterhalb des Heizungselements 5 in einer Lageebene parallel zu diesem mit vorgebbarem Spaltfreiraum angeordnet ist. Es erstreckt sich dabei vorzugsweise über die gesamte Durchströmungsquerschnittsfläche des Gehäuses. Strömungskonditionierungsmittel 6, Heizungselement 5, sowie Sorptionseinheit 4 sind also in vorgebbaren Höhenabständen hintereinander in zueinander parallelen Lageebenen im Gehäuse 3 der Sorptionstrocknungsvorrichtung 1 kolonnenartig bzw. in Reihe positioniert. Insbesondere sind sie zueinander kongruent angeordnet. Das Strömungskonditionierungsmittel 6 sitzt dabei vorzugsweise oberhalb oder zumindest im Höhenbereich der Oberkante des einmündenden, einlassseitigen Rohrabschnitts 103a im Gehäuse 3.

Hier im Ausführungsbeispiel von Figur 2 wird durch das Strömungskonditionierungsmittels 6 somit bewirkt, dass bezogen auf die jeweilige Durchströmungsquerschnittsfläche in Strömungsrichtung hinter dem Strömungskonditionierungsmittel 6 alle Strömungskomponenten der auf das Heizungselement 5 zuströmenden Luftströmung 15 hinsichtlich ihrer Durchflussgeschwindigkeiten etwa gleich groß sind, d.h. sie bewegen sich mit etwa derselben Ausbreitungsgeschwindigkeit an allen Orten der von ihr durchströmten Querschnittsfläche fort. Durch eine derart vergleichmäßigte Luftströmung, deren Strömungskomponenten bezogen auf die jeweilige Durchgangsquerschnittsfläche der Sorptionseinheit im Wesentlichen dieselbe Fortbewegungsgeschwindigkeit und/oder dieselbe Eintrittstemperatur aufweisen, wird vom Heizungselement 5 auf diese sich etwa gleich schnell fortbewegenden Strömungskomponenten jeweils etwa die gleiche Wärmeportion transferiert, so dass durch die Eintrittsfläche der Sorptionseinheit 4, die hinter dem Heizungselement 5 liegt, eine bezüglich ihrer Eintrittstemperatur und Strömungsgeschwindigkeit etwa gleichverteilte, d.h. weitgehend homogene Luftströmung hindurchtritt. Diese Konstruktionvariante mit dem dem Heizungselement vorangestellten Strömungskonditionierungsmittel stellt also auch weitgehend sicher, dass die an den verschiedenen Orten der Eintrittsfläche der Sorptionseinheit ankommenden, mit etwa der gleichen Wärmemenge aufgeheizten Strömungskomponenten der Luftströmung an jeder Stelle der Eintrittsfläche im Wesentlichen dieselbe Eintrittstemperatur und zumindest annäherungsweise dieselbe Strömungsgeschwindigkeit aufweisen. Dadurch lässt sich erreichen, dass die Luftströmung 15 durch die Sorptionseinheit 4 mit einem im Wesentlichen gleichen Volumenstrom pro Flächen- und/oder Volumeneinheit des Trocken- bzw. Sorptionsmaterials 41 der Sorptionseinheit 4 hindurchströmt, so dass sich das Gesamtvolumen des Sorptionsmaterials 41 weitgehend gleichmäßig desorbieren lässt, ohne dass unerwünschte, lokale Feuchtigkeitsstellen verbleiben würden. Damit lässt sich die Zeitdauer für die Desorption des Sorptionsmaterials gegenüber einem herkömmlichen Sorptionstrocknungssystem ohne Konditionierungsmittel verkürzen, was die aufzuwendende Energie für eine weitgehend vollständige Trocknung des Sorptionsmaterials verringert.

Umgekehrt lässt sich zusätzlich oder unabhängig hiervon auch beim Sorptionsvorgang des Sorptionstrocknungssystems zum Trocknen der feuchten Luft im Spülbehälter während des Trocknungsschritts eines Geschirrspülprogramms der Geschirrspülmaschine mit Hilfe des zusätzlich in das Sorptionstrocknungssystem integrierten Strömungskonditionierungsmittels aufgrund der Strömungsvergleichmäßigung über die Gesamteintrittsfläche der Sorptionseinheit betrachtet eine verbesserte, gleichmäßiger Adsorption von Feuchtigkeit durch deren Sorptionsmaterial erreichen.

Figur 3 zeigt einen vergleichbaren Aufbau der Sorptionstrocknungsvorrichtung 1 wie in den Figuren 1, 2. Anstelle der Lochstruktur des Lochbleches 6 ist hier die Konditionierung der Luftströmung 14 mit Hilfe von ein oder mehreren die Luftströmung 14 umlenkenden Leitblechen 7 oder Luftumlenkschaufeln bewirkt. Durch die Leitbleche 7 werden Bereiche der Luftströmung 14 mit einer stärkeren bzw. intensiveren Strömung, d. h. zum Beispiel mit höherer Strömungsgeschwindigkeit in Bereiche mit einer weniger intensiven Strömung, insbesondere zum Beispiel mit niedrigerer Strömungsgeschwindigkeit umgelenkt, um somit eine Vergleichmäßigung der Strömung über den Durchlassquerschnitt des einlassseitigen Rohrabschnitts 103a des Luftführungskanals 1 zu erzielen. Die Leitbleche fungieren somit als eine Art Strömungsgleichrichter. Die in Strömungsrichtung nach den Leitblechen 7 vorliegende Luftströmung 15 ist hinsichtlich ihres Strömungsquerschnittsprofils weitgehend vergleichmäßigt und ermöglicht somit eine gleichmäßige Erwärmung durch das Heizungselement 5 und eine gleichmäßige Durchströmung durch die Sorptionseinheit 4. Im Unterschied zum Ausführungsbeispiel von Figur 2 ist im Ausführungsbeispiel von Figur 3 das Heizungselement 5 unterhalb der Oberkante des Einmündungsquerschnitts des Rohrabschnitts 103a im bodennahen Bereich des Gehäuses 3 angeordnet, so dass es unterseitig und oberseitig von der gleichgerichteten Strömung 15 beströmt wird. Im Übrigen gelten die zum ersten Ausführungsbeispiel der Figuren 1 und 2 vorstehend gemachten Erläuterungen in analoger Weise.

In Figur 4 ist in Abwandlung zum Ausführungsbeispiel von Figur 2 eine Sorptionstrocknungsvorrichtung 1 in schematischer Längsschnittdarstellung gezeigt, bei welcher das Heizungselement 5 entlang einem Teilabschnitt oder dem Gesamtabschnitt seiner Ausdehnung oberhalb und unterhalb von einem Loch- bzw. Schlitzblech 8.1, 8.2 umgeben ist. Oberhalb des Heizungselements 5 ist das obere, erste Lochblech 8.1 angeordnet, während sich analog dazu unterhalb des Heizungselements 5 das untere, zweite Lochblech 8.2 befindet. Insbesondere sind beide Loch- bzw. Schlitzbleche 8.1, 8.2 parallel zur horizontalen Lageebene des Heizungselements 5 in einem vorgebbaren Spalthöhenabstand h1, h2 angeordnet. Das untere Lochblech 8.2 überdeckt dabei die Gesamtfläche der unteren Anströmebene des Heizungselements 5, das obere Lochblech 8.1 die gesamte obere Abströmebene des Heizungselements 5. Beide Lochbleche 8.1, 8.2 sowie das dazwischen positionierte Heizungselement 5 erstrecken sich weitgehend über die gesamte lichte Breite des Gehäuses 3 der Sorptionstrocknungsvorrichtung 1. Entsprechend verlaufen sie senkrecht zur Zeichenebene von Figur 4 im Wesentlichen entlang der gesamten Tiefenerstreckung des Gehäuses 3. Das untere Lochblech 8.2, das Heizungselement 5 sowie das obere Lochblech 8.1 sind dabei oberhalb der Oberkante des einmündenden, einlassseitigen Rohrabschnitts 103a im Gehäuse 3 vor der Eintrittsfläche der Sorptionseinheit 4 positioniert. Das untere Lochblech 8.2 bildet im Wesentlichen die gedachte geradlinige Verlängerung der Oberkante des einmündenden Rohrabschnitts 103a. Auf diese Weise strömt die im Einmündungsbereich 2 undefinierte, insbesondere ungleichmäßige bzw. ungleichverteilte Luftströmung 14 in das Gehäuse 3 wie durch ein verlängertes Rohr bis zur strömungsabwärtsseitigen Seitenwand 500 ein. Diese Einströmungsrichtung ist in der Figur 4 mit einem Pfeil 501 symbolisiert. Beide Lochbleche 8.1 und 8.2 weisen Löcher bzw. Schlitze mit in Einströmungsrichtung 501 zunehmenden Lochdurchmessern bzw. Schlitzbreiten auf. Hierdurch wird eine Konditionierung der ursprünglichen, undefinierten Luftströmung 14 bewirkt, so dass unmittelbar vor dem Eintritt in die Sorptionseinheit 4 ein gleichmäßiges Strömungsprofil an jeder Eintrittstelle vorliegt, das wiederum durch gleichartige Pfeile am Eintritt in die Sorptionseinheit 4 dargestellt ist. Sowohl durch unterschiedliche Lochdurchmesser bzw. Schlitzbreiten D und/oder durch eine geeignete Wahl des Höhenabstandes h₁ bzw. h₂ des jeweiligen Lochblechs 8.1 oder 8.2 von dem Heizungselement 5 wird die Konditionierung der Luftströmung beeinflusst. Die Lochbleche 8.1 und 8.2 bzw. entsprechende Schlitzbleche führen zu einer Zwangsströmung der Luftströmung und drängen die Luft an das Heizungselement 5 mehr oder weniger stark heran, so dass zum einen eine gleichverteilte Erwärmung der Luftströmung sowie zum anderen eine gleichverteilte Strömungsgeschwindigkeitsverteilung über die Durchtrittsquerschnittsfläche des Gehäuses 3 betrachtet bewirkt wird. Im Einzelnen konditioniert das untere Lochblech 8.2 die Luftströmung in vertikaler Richtung durch das Gehäuse 3 derart, dass an jedem Ort in der Lageebene des Heizungselements 5 ein weitgehend gleicher Wärmemengentransfer auf die dort vorbeiströmende Luftströmungskomponente stattfindet. Das dem Heizungselement 5 in vertikaler Strömungsrichtung 16 nachgeordnete zweite, obere Lochblech 8.1 dient dazu, die Eintrittsfläche der nachfolgenden Sorptionseinheit 4 mit einer hinsichtlich der Strömungsgeschwindigkeit vergleichmäßigten Luftströmung 15 zu beströmen. Dies bedeutet, dass an der Eintrittsfläche der Sorptionseinheit die Strömungsgeschwindigkeiten der ortsverschiedenen Strömungskomponenten der konditionierten Luftströmung 15 durch die Strömungskonditionierung im Wesentlichen gleich gemacht sind. Verallgemeinert ausgedrückt konditionieren das oberseitige Lochblech 8.1 zwischen dem Heizungselement 5 und der Sorptionseinheit 4 sowie das unterseitige Lochblech 8.2 als Strömungskonditionierungsmittel die undefiniert ankommende Luftströmung 14 derart, dass über das Strömungsquerschnittsprofil der Sorptionseinheit 4 betrachtet im Wesentlichen der gleiche Volumenstrom pro Flächen- und/oder Volumeneinheit des Trockenmaterials 41 der Sorptionseinheit 4 mit etwa derselben Eintrittstemperatur hinduchströmt. Die Lochbleche 8.1 und 8.2 können ggf. auch vollständig oder teilweise miteinander verbunden sein, wie in Figur 4 mit gestrichelten Linien angedeutet ist.

Für eine derartige Vergleichmäßigung der in die Sorptionseinheit 4 einströmenden Luftströmung hinsichtlich Temperaturverteilung und Strömungsgeschwindigkeitsverteilung über die Eintrittsfläche der Sorptionseinheit betrachtet kann es ggf. ausreichend sein, lediglich das untere Lochblech bzw. Schlitzblech 8.2 vorzusehen und das obere Lochblech 8.1 wegzulassen. Dadurch kann die Sorptionstrocknungsvorrichtung in vorteilhafter weise kompakter bezüglich der Höhe gemacht werden.

Im Ausführungsbeispiel von Figur 4 ist am Boden des Gehäuses 3 unterhalb des Heizungselements 5 zusätzlich ein schräg angestelltes Leitblech 9 in Form einer ansteigenden Rampe in Einströmungsrichtung 501 derart vorgesehen, dass sich der Einströmungsquerschnitt auf die strömungsabwärtsseitige Seitenwand 500 des Gehäuses 3 zunehmend verjüngt. Dadurch wird in demjenigen Bereich die Strömungsgeschwindigkeit durch das untere Lochblech 8.2 erhöht, wo dieses die größeren Durchgangsöffnungen als strömungsaufwärtsseitig aufweist. Die in das Gehäuse 3 einströmende Luftströmung 14 wird durch das Leitblech bzw. die Schikane 9 zunehmend auf das stromabwärtsseitige Ende des unteren Lochblechs 8.2 zu in die Nähe des Heizungselements 5 geführt. Das Leitblech bzw. die Strömungsschikane 9 bewirkt somit eine zusätzliche Zwangsführung für die ankommende Luftströmung 14 und damit einen Einfluss auf die Konditionierung der Luftströmung 14. Der Abstand d des Leitblechs 9 von dem Heizungselement 5 nimmt insbesondere ausgehend vom Eingang des Gehäuses 3 auf die stromabwärtsseitige Seitenwand 500 ab, wodurch im dortigen endseitigen Bereich der Einströmungsöffnung des Gehäuses 3 die Anschmiegung der Luftströmung an das Heizungselement 5 verstärkt wird. Der Höhenabstand h₁ bzw. h₂ der Lochbleche 8.1 und 8.2 von dem Heizungselement 5 kann über die Breite des Heizungselements 5 konstant sein oder auch variabel ausgeführt werden, so dass die Strömung mehr oder weniger an das Heizungselement 5 angeschmiegt wird.

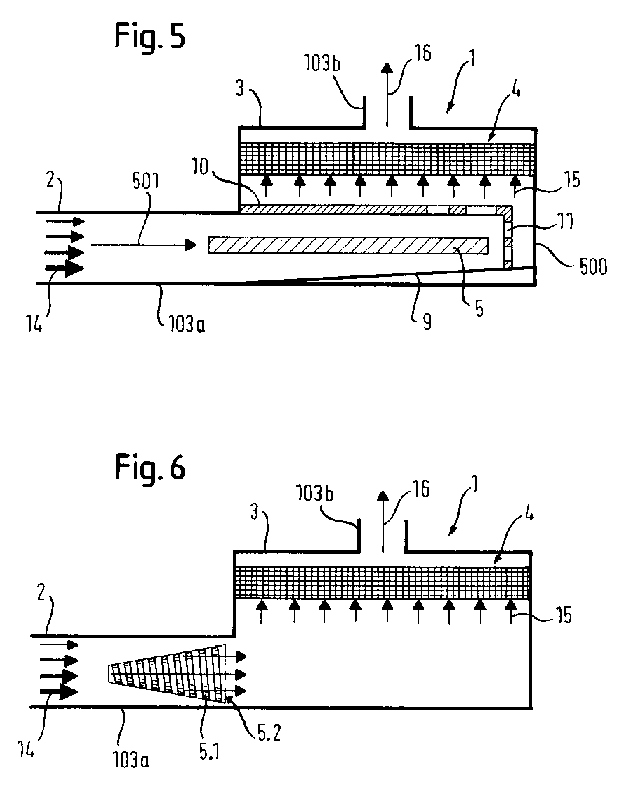

Die Prinzipskizze von Figur 5 stellt eine Heizung mit einem Heizungselement 5 dar, welches von einem Rohr 10 umgeben ist. Das Rohr 10 bildet die geradlinige Verlängerung des einlassseitigen Rohrabschnitts 103a in das Gehäuse 3 in dessen bodennahem Bereich hinein bis etwa zur stromabwärtsseitigen Seitenwand 500 des Gehäuses. Es weist insbesondere an seinem Endabschnitt oberseitig und/oder stirnseitig Löcher 11 auf, welche die vom darunter positionierten Heizungselement 5 erwärmte Luft austreten lassen. Eine Querschnittsverengung des Rohres 10 ist durch das Leitblech 9 vorgesehen, wodurch eine Zwangsbeströmung des Heizungselements erfolgt. Durch die dadurch bewirkte hohe Strömungsgeschwindigkeit entlang dem Heizungselement 5 wird der ankommende, eingeleitete Luftstrom 14 über die Einströmquerschnittsfläche des Rohres 10 betrachtet im Wesentlichen isotherm erwärmt. Am stirnseitigen Ende des Rohres 10 und/oder an der Oberseite des Rohres 10 tritt die erwärmte Luft aus dem Rohr 10 durch die Löcher 11 derart aus, dass über die Eintrittsquerschnittsfläche der Sorptionseinheit 4 betrachtet eine konditionierte Luftströmung 15 mit etwa gleicher Strömungsgeschwindigkeit und gleicher Eintrittstemperatur bewirkt ist. Gegebenenfalls können im Zwischenraum zwischen dem Rohr 10 und der Sorptionseinheit 4 ein oder mehrere weitere Strömungskonditionierungsmittel vorgesehen sein, um die Luftströmung durch die Sorptionseinheit 4 möglichst gleichmäßig hinsichtlich Strömungsgeschwindigkeit und/oder Eintrittstemperatur hindurchzuführen.

In Figur 6 ist als weitere Ausführungsalternative eine Drahtwendelheizung 5.1 als kombiniertes Heizungs- und Strömungskonditonierungsmittel im Strömungseintrittsabschnitt 2 des einlassseitigen Rohrabschnitts 103a vorgesehen. Die Luft 14 durchströmt vor dem Eintritt in das Gehäuse 3 die Drahtwendelheizung 5.1 und wird hierdurch strömungskonditioniert und gleichzeitig aufgeheizt. Für die Funktion und Wirkungsweise der Drahtwendel ist es dabei weitgehend unerheblich, ob diese so ausgerichtet ist, dass sie sich in Strömungsrichtung verjüngt oder aufweitet. Ihr aufgeweitetes Ende erstreckt sich im Wesentlichen über die gesamte Querschnittsbreite des einlassseitigen Rohrabschnitts 103a. Durch eine entsprechende Anordnung der Windungen der Drahtwendelheizung 5.1 im Strömungseintrittsabschnitt 2 und/oder durch zusätzliche Leiteinrichtungen wie in den vorausgehenden Ausführungsbeispielen kann eine über ihr Strömungsquerschnittsprofil ungleichmäßige Luftströmung 14 ausgeglichen werden, so dass nach der Drahtwendelheizung 5.1 die Luftströmung 15 gleichmäßig strömt und gleichmäßig erwärmt ist. Die konisch ausgeführte Drahtwendelheizung 5.1 führt somit zu einer gleichmäßigen Erwärmung der Luft über den Querschnitt und über die Heizungslänge. Lokale Überhitzungen des Drahtes der Drahtwendelheizung aufgrund deren konischen Geometrieform sind weitgehend vermieden. Da die verschiedene Windungsabschnitte der Drahtwendelheizung an verschiedenen radialen Ortspunkten liegen und somit in Strömungsrichtung betrachtet nicht mehrfach deckungsgleich hintereinanderliegen, wird eine Vergleichmäßigung der Luftströmung über die Durchtrittsquerschnittsfläche des Rohrabschnitts 103a und damit auch eine gleichmäßige isotherme Erwärmung der Luftströmung 15 erreicht, die schließlich die Sorptionseinheit 4 durchsetzt. Die Vergleichmäßigung wird insbesondere dadurch erreicht, dass ankommende Teilluftmassen der Luftmassenströmung 14 in unterschiedlichen radialen Positionen der jeweiligen Durchtrittsquerschnittsfläche von verschiedenen, radial zueinander versetzten Wendelabschnitten lateral, d.h. in radialer Vorzugsrichtung ausgelenkt und um den jeweiligen Wendelabschnitt zur Weiterströmung in axialer Vorzugsrichtung herumgelenkt werden, so dass die verschiedenen Luftmassenanteile der Luftströmung hinsichtlich ihrer Strömungsgeschwindigkeit gleichmäßiger gemacht werden. Zweckmäßig kann es insbesondere sein, wenn die Drahtwendel bzw. Heizwendel eine sich aufweitende, insbesondere konische Geometrieform aufweist. Dadurch kann die Drahtwendel nicht nur die Aufheizung der Luftströmung für die Desorption des Sorptionsmaterials der Sorptionseinheit bewirken, sondern zusätzlich als Strömungskonditionierungsmittels zur Vergleichmäßigung der Luftströmung dienen. Ist die Zentralachse der Drahtwendel in Strömungsrichtung ausgerichtet, dann ist weitgehend sichergestellt, dass ein ankommender Luftteilstrom auf seinem Strömungsweg nur lediglich einen einzigen der in verschiedenen Ganghöhenlagen angeordneten Heizwendelabschnitte be- und/oder umströmt. Auf diese Weise sind lokale Überhitzungen der Heizwendel weitgehend vermieden. Denn durch die Aufweitung der Drahtwendel kann eine Teilluftmasse, die an einem vorausgehenden Wendelabschnitt erhitzt worden ist, weitgehend geradlinig und ungehindert aus der Drahtwendel herausströmen, ohne auf einen nachgeordneten Wendelabschnitt zu treffen.

Vorteilhaft kann es ggf. sein, wenn die Drahtwendel 5.1 zusätzlich von einem äußeren Zwangsbeströmungsrohr eingekapselt ist. Dies ist in der Figur 5 mit 5.2 bezeichnet. Dadurch lässt sich eine erhöhte Beströmungsgeschwindigkeit der Luft erreichen, mit der diese über die Drahtwendel strömt, so dass ein erhöhter, effizienter Wärmeübertrag von der Drahtwendel auf die Luftströmung 14 bewirkt ist.

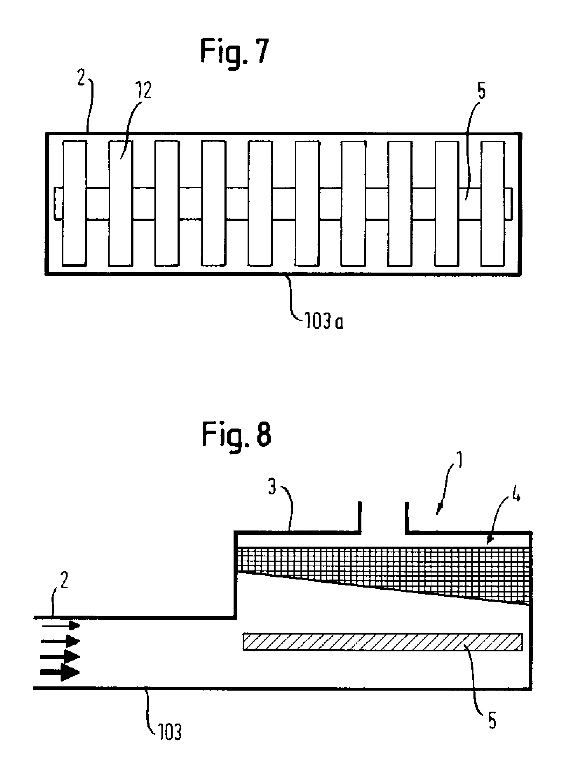

Aus Figur 7 ist eine Draufsicht auf den einlassseitigen Rohrabschnitt 103a des Luftzuführungskanals 103 im Strömungseintrittbereich 2 dargestellt, in welchem sich ein Heizstab 5 als Heizungselement befindet. Auf dem Heizstab 5 sind eine Vielzahl von Lamellen 12 angeordnet, welche thermisch und mechanisch an den Heizstab 5 angebunden sind. Durch die Lamellen 12 wird eine Oberflächenvergrößerung des Heizstabes 5 bewirkt, wodurch eine schnellere und gleichmäßige Erwärmung der Luft bewirkt wird, wenn diese an dem Heizstab 5 und den Lamellen 12 entlangströmt. Durch die Lamellen 12 wird außerdem eine Vergleichmäßigung des Strömungsprofils erzielt. Durch eine entsprechende Formgebung der Lamellen kann auch die Strömungsrichtung und die Intensität der Strömung beeinflusst und vergleichmäßigt werden.

Figur 8 zeigt eine vorteilhafte Ausführungsvariante eines Strömungskonditionierungsmittels mittels eines ungleich dicken reversibel dehydrierbaren Materials in der Sorptionseinheit 4. Der Widerstand gegen die Durchströmung mit der Luftströmung ist hierdurch an der dünneren Soprtionsmaterialschicht der Sorptionseinheit 4 geringer als an deren dickeren Stelle. Hierdurch stellt bereits die Sorptionseinheit 4 selbst eine zumindest teilweise wirkende Strömungskonditionierungseinrichtung dar, da beim Durchtritt eine stärkere Luftströmung im Bereich der dickeren Sorptionsmaterialschicht mehr gebremst wird als eine schwächere Luftströmung im Bereich der dünneren Sorptionsmaterialschicht, wodurch das reversibel dehydrierbare Material pro Fläche- und/oder Volumeneinheit im Wesentlichen gleichmäßig mit Luft beaufschlagt wird.

Insbesondere sind Kombinationen der einzelnen erläuterten Ausführungsvarianten miteinander möglich. Beispielsweise können Einrichtungen und Heizungen, die in dem Strömungseintritt 2 dargestellt und beschrieben sind, auch in einem Rohr 10 oder innerhalb des Gehäuses 3 angeordnet sein. Auch die Art des Gebläses kann unterschiedlich sein. So sind beispielsweise Radial- oder Axialgebläse möglich. Ausführungen, wie sie beispielsweise in der DE 103 53 774 A1 und der DE 10 2005 004 096 A1 offenbart sind, können ebenfalls die mit der vorliegenden Erfindung beanspruchte Einrichtung zur Strömungskonditionierung aufweisen.

Dieses Dokument - DE 10 2005 004 096 A1 - wird als nächstliegender Stadt der Technick betrachtet.

Im Zusammenhang mit vorstehenden Ausführungsbeispielen sind zusammenfassend betrachtet insbesondere folgende Bezugszeichen verwendet:

### Bezugszeichenliste

- 1: Sorptionstrocknungsvorrichtung
- 2: Strömungseintritt
- 3: Gehäuse
- 4: Sorptionseinheit
- 5: Heizungselement
- 5.1: Drahtwendelheizung
- 5.2: Kapselung der Drahtwendelheizung
- 6: Lochblech
- 7: Leitblech
- 8.1: Lochblech
- 8.2: Lochblech
- 9: Leitblech
- 10: Rohr
- 11: Loch
- 12: Lamelle
- 13: Einströmrichtung
- 14: unkonditionierte, ankommende Luftströmung
- 15: konditionierte Luftströmung
- 15': aus der Sorptionseinheit ausströmende Luftströmung
- 16: vertikale Luftströmung durch das Gehäuse der Sorptionstrocknungvorrichtung
- 17: Bodenbaugruppe der Geschirrspülmaschine
- 41: reversibel dehydrierbares Material
- 42, 42': Siebe
- 100: Geschirrspülmaschine
- 101: Spülbehälter
- 102: Gitterkorb
- 103: Luftführungskanal
- 103a, 103b: Rohrabschnitte des Luftführungskanals
- 104: Gebläse
- 105: Sorptionstrocknungsvorrichtung
- 200: Sorptionstrocknungssystem
- 401: Eintrittsfläche der Sorptionseinheit
- 500: Seitenwand des Gehäuses der Sorptionstrocknungsvorrichtung
- 501: Durchströmungsrichtung
- 600: Auslassstutzen
- 1031: Einlass des Spülbehälters in Luftführungskanal
- 1032: Auslass des Luftführungskanals in Spülbehälter
- 402: Austrittsfläche der Sorptionseinheit
- D: Durchmesser
- d: Abstand
- h: Abstand

## Patentansprüche

1. Geschirrspülmaschine mit einem Spülbehälter (101) und einer Sorptionstrocknungsvorrichtung (1, 105), die mit dem Spülbehälter (101) luftleitend verbunden ist, wobei vor der Sorptionseinheit (4) der Sorptionstrocknungsvorrichtung (1, 105) mindestens ein Gebläse (104) zur Erzeugung einer Luftströmung (14) vorgesehen ist, wobei in Strömungsrichtung betrachtet zwischen dem Gebläse (104) und der Sorptionseinheit (4) mit dem reversibel dehydrierbaren Trockenmaterial (41) der Sorptionstrocknungsvorrichtung (1, 105) mindestens ein zugeordnetes Heizungselement (5) zur Desorption vorgesehen ist, und wobei ein oder mehrere Strömungskonditionierungsmittel (6, 8.1, 8.2, 10) zur Vergleichmäßigung des Strömungsquerschnittsprofils der Luftströmung (14) beim Durchströmen der Sorptionstrocknungsvorrichtung (1, 105) vor dem Eintritt der Luftströmung in die Sorptionseinheit (4), insbesondere zwischen dem Gebläse (104) und dem Heizungselement (5), und/oder insbesondere zwischen dem Heizungselement (5) und der Sorptionseinheit (4), vorgesehen sind.

2. Geschirrspülmaschine nach Anspruch 1, **dadurch gekennzeichnet, dass** die Sorptionstrocknungsvorrichtung (1, 105) mindestens eine Sorptionseinheit (4) mit reversibel dehydrierbaren Trockenmaterial (41), insbesondere einem Zeolithfestbett oder einer Zeolithschüttung, aufweist.

3. Geschirrspülmaschine nach Anspruch 2, **dadurch gekennzeichnet, dass** die ein oder mehreren Strömungskonditionierungsmittel (6, 8.1, 8.2, 10) derart ausgebildet sind, dass die Luftströmung (15) durch die Sorptionseinheit (4) mit einem im Wesentlichen gleichen Volumenstrom pro Flächen- und/oder Volumeneinheit des Trockenmaterials (41) der Sorptionseinheit (4) hindurchströmt.

4. Geschirrspülmaschine nach mindestens einem der vorhergehenden Ansprüche, **dadurch gekennzeichnet, dass** die ein oder mehreren Strömungskonditionierungsmittel (6, 8.1, 8.2, 10) die Luftströmung (14) derart konditionieren, dass im Wesentlichen jede Stelle der Eintrittsquerschnittsfläche (401) der mit reversibel dehydrierbaren Trockenmaterial (41) bestückten Sorptionseinheit (4) der Sorptionstrocknungsvorrichtung (1, 105) mit weitgehend demselben Luftvolumenstrom (V) beaufschlagt und durchströmt ist.

5. Geschirrspülmaschine nach mindestens einem der vorhergehenden Ansprüche, **dadurch gekennzeichnet, dass** die ein oder mehreren Strömungskonditionierungsmittel (6, 8.1, 8.2, 10) die Luftströmung (14) derart konditionieren, dass im Wesentlichen jede Stelle der Eintrittsquerschnittsfläche (401) der mit reversibel dehydrierbaren Trockenmaterial (41) bestückten Sorptionseinheit (4) der Sorptionstrocknungsvorrichtung (1, 105) mit einem Luftvolumenstrom (V) von weitgehend derselben Eintrittstemperatur (T) durchströmt ist.

6. Geschirrspülmaschine nach mindestens einem der vorhergehenden Ansprüche, **dadurch gekennzeichnet, dass** die ein oder mehreren Strömungskonditionierungsmittel (6, 8.1, 8.2, 10) die Luftströmung (14) derart konditionieren, dass im Wesentlichen jede Stelle der Eintrittsquerschnittsfläche (401) der mit reversibel dehydrierbaren Trockenmaterial (41) bestückten Sorptionseinheit (4) der Sorptionstrocknungsvorrichtung (1, 105) mit einem Luftvolumenstrom (V) von weitgehend derselben Strömungsgeschwindigkeit (VE) durchströmt ist.

7. Geschirrspülmaschine nach mindestens einem der vorhergehenden Ansprüche, **dadurch gekennzeichnet, dass** das Gehäuse (3) der Sorptionstrocknungsvorrichtung (1, 105) derart geformt und positioniert ist, dass es von einer im Wesentlichen vertikalen Luftströmung (16) durchströmt ist.

8. Geschirrspülmaschine nach mindestens einem der vorhergehenden Ansprüche, **dadurch gekennzeichnet, dass** die Sorptionstrocknungsvorrichtung (1, 105) in einer Bodenbaugruppe (17) unterhalb des Spülbehälters (101) vorgesehen ist.

9. Geschirrspülmaschine nach mindestens einem der vorhergehenden Ansprüche, dadurch gekenntzeichnet, dass die Sorptionseinheit (4) im Gehäuse der Sorptionstrocknungsvorrichtung (1, 105) in einer im Wesentlichen horizontalen Lageebene angeordnet ist.

10. Geschirrspülmaschine nach mindestens einem der vorhergehenden Ansprüche, **dadurch gekennzeichnet, dass** die Sorptionstrocknungsvorrichtung (1, 105) über mindestens einen Luftführungskanal (103) mit mindestens einem Auslass (1031) und mit mindestens einem Einlass (1032) des Spülbehälters (101) verbunden ist.

11. Geschirrspülmaschine nach Anspruch 10, **dadurch gekennzeichnet, dass** der Luftführungskanal (103) weitgehend außerhalb des Spülbehälters (101) angeordnet ist.

12. Geschirrspülmaschine nach einem der Ansprüche 10 oder 11, **dadurch gekennzeichnet**, udass der auslassseitige Rohrabschnitt (103b) des Luftführungskanals (103) mit mindestens einem Einlass (1032) des Spülbehälters (103) in dessen bodennahem Bereich verbunden ist.

13. Geschirrspülmaschine nach mindestens einem der Ansprüche 10 mit 12, **dadurch gekennzeichnet, dass** der einlassseitige Rohrabschnitt (103a) des Luftführungskanals (103) mit mindestens einem Auslass (1031) des Spülbehälters (103) in dessen deckennahem Bereich verbunden ist.

14. Geschirrspülmaschine nach Anspruch 13, **dadurch gekennzeichnet, dass** der einlassseitige Rohrabschnitt (103a) des Luftführungskanals (103) in das Gehäuse (3) der Sorptionstrocknungsvorrichtung (1, 105) derart im bodennahen Bereich einmündet, dass seine Einströmungsrichtung (14), insbesondere um etwa 90 °, in die Durchströmungsrichtung (16) des Gehäuses (3) umgelenkt ist.

15. Geschirrspülmaschine nach mindestens einem der Ansprüche 10 mit 14, **dadurch gekennzeichnet, dass** im einlassseitigen Rohrabschnitt (103a) des Luftführungskanals (103) vor der Sorptionstrocknungsvorrichtung (1, 105) das mindestens eine Gebläse (104) zur Erzeugung der Luftströmung (104) zur Sorptionseinheit (4) der Sorptionstrocknungsvorrichtung (1) vorgesehen ist.

16. Geschirrspülmaschine nach mindestens einem der vorhergehenden Ansprüche, dadurch gekenntzeichnet, dass im Gehäuse (3) der Sorptionstrocknungsvorrichtung (1, 105) in Strömungsrichtung betrachtet vor deren Sorptionseinheit (4) mit dem reversibel dehydrierbaren Trockenmaterial (41) das mindestens eine Heizungselement (5) zu dessen Desorption als Bestandteil der Sorptionstrocknungsvorrichtung (1, 105) vorgesehen ist.

17. Geschirrspülmaschine nach Anspruch 16, **dadurch gekennzeichnet, dass** das Heizungselement (5) im Gehäuse (3) der Sorptionstrocknungsvorrichtung (1, 105) unterhalb der Eintrittsquerschnittsfläche (401) der Sorptionseinheit (4) sitzt.

18. Geschirrspülmaschine nach mindestens einem der vorhergehenden Ansprüche, **dadurch gekennzeichnet, dass** die ein oder mehreren Strömungskonditionierungsmittel (8.2) in Strömungsrichtung betrachtet zwischen dem Gebläse (104) und dem Heizungselement (5) derart spezifisch für das Heizungselement (5) vorgesehen sind, dass eine Beströmung im Wesentlichen an jeder Stelle der Beströmungsoberfläche des Heizungselements (5) mit weitgehend demselben Luftvolumenstrom, insbesondere gleicher Strömungsgeschwindigkeit, bewirkt ist.

19. Geschirrspülmaschine nach Anspruch 18, **dadurch gekennzeichnet, dass** die Strömungskonditionierungsmittel (8.2) für das Heizungselement (5) im Gehäuse (3) der Sorptionstrocknungsvorrichtung (1, 105), insbesondere unterhalb des Heizungselements (5), untergebracht sind.

20. Geschirrspülmaschine nach mindestens einem der vorhergehenden Ansprüche, **dadurch gekennzeichnet, dass** das Heizungselement mindestens einen Heizstab (5) oder mindestens eine Drahtwendel (5.1) aufweist.

21. Geschirrspülmaschine nach Anspruch 20, **dadurch gekennzeichnet, dass** die Drahtwendel (5.1) eine sich aufweitende, insbesondere konische Geometrieform aufweist.

22. Geschirrspülmaschine nach einem der Ansprüche 20 oder 21, **dadurch gekennzeichnet, dass** der Heizstab (5) oder die Drahtwendel (5.1) zusätzlich von einem äußeren Zwangsbeströmungsrohr (10) eingekapselt ist.

23. Geschirrspülmaschine nach einem oder mehreren der vorhergehenden Ansprüche, **dadurch gekennzeichnet, dass** das Heizungselement (5, 5.1) in einem Rohrabschnitt (10) zur Führung der Luftströmung (14) untergebracht ist.

24. Geschirrspülmaschine nach Anspruch 23, **dadurch gekennzeichnet, dass** sich der Rohrabschnitt (10) in Strömungsrichtung betrachtet hinsichtlich seiner Durchlassquerschnittsfläche verjüngt.

25. Geschirrspülmaschine nach einem der Ansprüche 23 oder 24, **dadurch gekennzeichnet, dass** der Rohrabschnitt (10) an seinem Ende und/oder seiner Oberseite ein oder mehrere Luftaustrittsöffnungen (11) aufweist.

26. Geschirrspülmaschine nach mindestens einem der vorhergehenden Ansprüche, **dadurch gekennzeichnet, dass** in mindestens einer Lageebene über und/oder unter dem Heizungselement (5; 5.1) mindestens ein Loch- oder Schlitzblech (8.1, 8.2) angeordnet ist.

27. Geschirrspülmaschine nach einem der Ansprüche 25 oder 26, dadurch aekennzeichnet, dass der Abstand (d) des Loch- oder Schlitzbleches (8.1, 8.2) oder des Rohrabschnitts (10) von dem Heizungselement (5; 5.1) und/oder die Größe (D) der Löcher oder Schlitze des Loch- oder Schlitzbleches (8.1,8.2) oder des Rohres (10) so gewählt sind, dass die Sorptionseinheit (4) der Sorptionstrocknungsvorrichtung (1, 105) bezüglich ihrer Eintrittsquerschnittsfläche (401) im Wesentlichen gleichmäßig angeströmt ist.

28. Geschirrspülmaschine nach mindestens einem der vorhergehenden Ansprüche, **dadurch gekennzeichnet, dass** an dem Heizungselement (5; 5.1) Lamellen (12) zur Strömungskonditionierung und/oder Oberflächenvergrößerung des Heizungselements (5; 5.1) vorgesehen sind.

29. Geschirrspülmaschine nach mindestens einem der vorhergehenden Ansprüche, **dadurch gekennzeichnet, dass** die ein oder mehreren Strömungskonditionierungsmittel (8.1) in Strömungsrichtung betrachtet zwischen mindestens einem Heizungselement (5) und der Sorptionseinheit (4) der Sorptionstrocknungsvorrichtung (105) derart spezifisch für die Sorptioneinheit (4) vorgesehen sind, dass im Wesentlichen jede Stelle der Eintrittsquerschnittsfläche (401) der mit reversibel dehydrierbaren Trockenmaterial (41) bestückten Sorptionseinheit (4) der Sorptionstrocknungsvorrichtung (105) mit weitgehend demselben Luftvolumenstrom (V) beaufschlagt und durchströmt ist.

30. Geschirrspülmaschine nach mindestens einem der vorhergehenden Ansprüche, **dadurch gekennzeichnet, dass** die ein oder mehreren Strömungskonditionierungsmittel (8.1) in Strömungsrichtung betrachtet zwischen mindestens einem Heizungselement (5) und der Sorptionseinheit (4) der Sorptionstrocknungsvorrichtung (105) derart spezifisch für die Sorptioneinheit (4) vorgesehen sind, dass im Wesentlichen jede Stelle der Eintrittsquerschnittsfläche (401) der mit reversibel dehydrierbaren Trockenmaterial (41) bestückten Sorptionseinheit (4) der Sorptionstrocknungsvorrichtung (1, 105) mit einem Luftvolumenstrom (V) von weitgehend derselben Eintrittstemperatur (T) durchströmt ist.

31. Geschirrspülmaschine nach mindestens einem der vorhergehenden Ansprüche, **dadurch gekennzeichnet, dass** die ein oder mehreren Strömungskonditionierungsmittel (8.1) in Strömungsrichtung betrachtet zwischen dem Heizungselement (5) und der Sorptionseinheit (4) der Sorptionstrocknungsvorrichtung (1, 105) derart spezifisch für die Sorptioneinheit (4) vorgesehen sind, dass im Wesentlichen jede Stelle der Eintrittsquerschnittsfläche (401) der mit reversibel dehydrierbaren Trockenmaterial (41) bestückten Sorptionseinheit (4) der Sorptionstrocknungsvorrichtung (1, 105) mit einem Luftvolumenstrom (V) von weitgehend derselben Strömungsgeschwindigkeit (VE) durchströmt ist.

32. Geschirrspülmaschine nach mindestens einem der vorhergehenden Ansprüche, **dadurch gekennzeichnet, dass** die ein oder mehreren Strömungskonditionierungsmittel durch mindestens eine Strömungsleiteinrichtung (7), insbesondere mindestens ein die Luftströmung (14) umlenkendes Leitblech, gebildet sind.

33. Geschirrspülmaschine nach mindestens einem der vorhergehenden Ansprüche, **dadurch gekennzeichnet, dass** die ein oder mehreren Strömungskonditionierungsmittel durch mindestens ein Lochgitter (6) und/oder mindestens ein Loch- oder Schlitzblech (8.1, 8.2) gebildet sind.

34. Geschirrspülmaschine nach Anspruch 33, **dadurch gekennzeichnet, dass** die Löcher (D) und/oder Schlitze des Lochgitters (6) und/oder des Loch- oder Schlitzbleches (8.1, 8.2) unterschiedlich groß gewählt sind.

35. Geschirrspülmaschine nach mindestens einem der vorhergehenden Ansprüche, **dadurch gekennzeichnet, dass** die Sorptionseinheit (1) selbst zumindest teilweise als Strömungskonditionierungsmittel zur Bewirkung einer weitgehend gleichmäßigen Durchströmung ausgebildet ist.

36. Geschirrspülmaschine nach mindestens einem der vorhergehenden Ansprüche, **dadurch gekennzeichnet, dass** die Sorptionseinheit (4) an ihrem Lufteintritt und/oder Luftaustritt jeweils von mindestens einem Sieb (42, 42') begrenzt ist.

37. Geschirrspülmaschine nach Anspruch 36, **dadurch gekennzeichnet, dass** die Sieböffnungen des jeweiligen Siebes (42, 42') derart unterschiedlich groß ausgebildet sind, dass das Sieb (42) zumindest teilweise ein Strömungskonditionierungsmittel bildet.

38. Geschirrspülmaschine nach einem oder mehreren der vorherigen Ansprüche, **dadurch gekennzeichnet, dass** die Sorptionseinheit (4) über ihre Durchtrittsfläche für die einströmende Luftströmung (15) betrachtet eine weitgehend gleiche Schichtdicke aufweist.

## Claims

1. Dishwasher with a washing container (101) and a sorption dryer device (1, 105), which is connected in an air-conducting fashion to the washing container (101), wherein at least one blower (104) for generating an airflow (14) is provided before the sorption unit (4) of the sorption dryer device (1, 105), wherein at least one allocated heating element (5) for desorption is provided between the blower (104) and the sorption unit (4) with the reversibly dehydratable drying material (41) of the sorption dryer device (1, 105) when viewed in the direction of flow, and wherein one or more flow-conditioning means (6, 8.1, 8.2, 10) are provided before the intake of the airflow into the sorption unit (4), in particular between the blower (104) and the heating element (5), and/or in particular between the heating element (5) and the sorption unit (4), for homogenising the flow cross-section profile of the airflow (14) as it flows through the sorption dryer device (1, 105).

2. Dishwasher according to claim 1, **characterised in that** the sorption dryer device (105) has at least one sorption unit (4) with reversibly dehydratable drying material (41), in particular a zeolite fixed bed or a packing of zeolite.

3. Dishwasher according to claim 2, **characterised in that** the said one or more flow-conditioning means (6, 8.1, 8.2, 10) are realised in such a way that the airflow (15) flows through the sorption unit (4) with an essentially identical volumetric flow per unit of area and/or volume of the drying material (41) of the sorption unit (4).

4. Dishwasher according to at least one of the preceding claims, **characterised in that** the said one or more flow-conditioning means (6, 8.1, 8.2, 10) condition the airflow (14) in such a way that essentially every point of the intake cross-section area (401) of the sorption unit (4) of the sorption dryer device (1, 105), which unit is fitted with reversibly dehydratable drying material (41), is struck by and permeated by largely the same volumetric airflow (V).

5. Dishwasher according to at least one of the preceding claims, **characterised in that** the said one or more flow-conditioning means (6, 8.1, 8.2, 10) condition the airflow (14) in such a way that essentially every point of the intake cross-section area (401) of the sorption unit (4) of the sorption dryer device (1, 105), which unit is fitted with reversibly dehydratable drying material (41), is permeated by a volumetric airflow (V) of largely the same intake temperature (T).

6. Dishwasher according to at least one of the preceding claims, **characterised in that** the said one or more flow-conditioning means (6, 8.1, 8.2, 10) condition the airflow (14) in such a way that essentially every point of the intake cross-section area (401) of the sorption unit (4) of the sorption dryer device (1, 105), which unit is fitted with reversibly dehydratable drying material (41), is permeated by a volumetric airflow (V) of largely the same flow velocity (VE).

7. Dishwasher according to at least one of the preceding claims, **characterised in that** the casing (3) of the sorption dryer device (1, 105) is shaped and positioned in such a way that it is permeated by an essentially vertical airflow (16).

8. Dishwasher according to at least one of the preceding claims, **characterised in that** the sorption dryer device (1, 105) is provided in a base module (17) underneath the washing container (101).

9. Dishwasher according to at least one of the preceding claims, **characterised in that** the sorption unit (4) is arranged in an essentially horizontal positional plane within the casing of the sorption dryer device (1, 105).

10. Dishwasher according to at least one of the preceding claims, **characterised in that** the sorption dryer device (1, 105) is connected via at least one air-routing duct (103) to at least one outlet (1031) and to at least one inlet (1032) of the washing container (101).

11. Dishwasher according to claim 10, **characterised in that** the air-routing duct (103) is arranged largely outside the washing container (101).

12. Dishwasher according to one of claims 10 or 11, **characterised in that** the outlet-side pipe segment (103b) of the air-routing duct (103) is connected to at least one inlet (1032) of the washing container (103) in the zone near the base of the said container.

13. Dishwasher according to at least one of claims 10 to 12, **characterised in that** the inlet-side pipe segment (103a) of the air-routing duct (103) is connected to at least one outlet (1031) of the washing container (103) in the zone near the roof of the said container.

14. Dishwasher according to claim 13, **characterised in that** the inlet-side pipe segment (103a) of the air-routing duct (103) opens into the casing (3) of the sorption dryer device (1, 105) in the zone near the base in such a way that its inflow direction (14) is deflected into the through-flow direction (16) of the casing (3), and in particular by around 90°.

15. Dishwasher according to at least one of claims 10 to 14, **characterised in that** at least one blower (104) for generating the airflow (104) to the sorption unit (4) of the sorption dryer device (1) is provided before the sorption dryer device (1, 105) in the inlet-side pipe segment (103a) of the air-routing duct (103).

16. Dishwasher according to at least one of the preceding claims, **characterised in that**, within the casing (3) of the sorption dryer device (1, 105), before the said device's sorption unit (4) with the reversibly dehydratable drying material (41) when viewed in the direction of flow, the at least one heating element (5) is provided as a constituent of the sorption dryer device (1, 105) for the said material's desorption.

17. Dishwasher according to claim 16, **characterised in that** the heating element (5) sits underneath the intake cross-section area (401) of the sorption unit (4) within the casing (3) of the sorption dryer device (1, 105).

18. Dishwasher according to at least one of the preceding claims, **characterised in that** the said one or more flow-conditioning means (8.2) are provided in such a specific way for the heating element (5) between the blower (104) and the heating element (5) when viewed in the direction of flow that a flow is brought about with largely the same volumetric air flow, and in particular the identical flow velocity, essentially at every point of the flow surface of the heating element (5).

19. Dishwasher according to claim 18, **characterised in that** the flow conditioning means (8.2) for the heating element (5) are accommodated within the casing (3) of the sorption dryer device (1, 105), and particularly underneath the heating element (5).

20. Dishwasher according to at least one of the preceding claims, **characterised in that** the heating element has at least one heating rod (5) or at least one wire coil (5.1).

21. Dishwasher according to claim 20, **characterised in that** the wire coil (5.1) has an expanding, and in particular conical, geometric shape.

22. Dishwasher according to one of claims 20 or 21, **characterised in that** the heating rod (5) or the wire coil (5.1) is additionally encapsulated by an outer forced flow pipe (10).

23. Dishwasher according to one or more of the preceding claims, **characterised in that** the heating element (5, 5.1) is accommodated in a pipe segment (10) for guiding the airflow (14).

24. Dishwasher according to claim 23, **characterised in that** the pipe segment (10) tapers in terms of its passage cross-section area when viewed in the direction of flow.

25. Dishwasher according to one of claims 23 or 24, **characterised in that** the pipe segment (10) has one or more air output openings (11) on its end and/or its top side.

26. Dishwasher according to at least one of the preceding claims, **characterised in that** at least one perforated or slotted plate (8.1, 8.2) is arranged in at least one positional plane above and/or below the heating element (5; 5.1).

27. Dishwasher according to one of claims 25 or 26, **characterised in that** the spacing (d) of the perforated or slotted plate (8.1, 8.2) or the pipe segment (10) from the heating element (5; 5.1) and/or the size (D) of the holes or slots in the perforated or slotted plate (8.1, 8.2) or in the pipe (10) are selected in such a way that the sorption unit (4) of the sorption dryer device (1, 105) essentially receives an even incoming flow with reference to its intake cross-section area (401).

28. Dishwasher according to at least one of the preceding claims, **characterised in that** fins (12) for conditioning the flow and/or enlarging the surface of the heating element (5; 5.1) are provided on the heating element (5; 5.1).

29. Dishwasher according to at least one of the preceding claims, **characterised in that** the said one or more flow-conditioning means (8.1) are provided in such a specific way for the sorption unit (4) between at least one heating element (5) and the sorption unit (4) of the sorption dryer device (105) when viewed in the direction of flow that essentially every point of the intake cross-section area (401) of the sorption unit (4) of the sorption dryer device (105), which unit is fitted with reversibly dehydratable drying material (41), is struck by and permeated by largely the same volumetric airflow (V).

30. Dishwasher according to at least one of the preceding claims, **characterised in that** the said one or more flow-conditioning means (8.1) are provided in such a specific way for the sorption unit (4) between at least one heating element (5) and the sorption unit (4) of the sorption dryer device (105) when viewed in the direction of flow that essentially every point of the intake cross-section area (401) of the sorption unit (4) of the sorption dryer device (1, 105), which unit is fitted with reversibly dehydratable drying material (41), is permeated by a volumetric airflow (V) with largely the same intake temperature (T).

31. Dishwasher according to at least one of the preceding claims, **characterised in that** the said one or more flow-conditioning means (8.1) are provided in such a specific way for the sorption unit (4) between the heating element (5) and the sorption unit (4) of the sorption dryer device (1, 105) when viewed in the direction of flow that essentially every point of the intake cross-section area (401) of the sorption unit (4) of the sorption dryer device (1, 105), which unit is fitted with reversibly dehydratable drying material (41), is permeated by a volumetric airflow (V) with largely the same flow velocity (VE).

32. Dishwasher according to at least one of the preceding claims, **characterised in that** one or more flow-conditioning means are formed by at least one flow-guiding facility (7), and in particular at least one guide plate deflecting the airflow (14).

33. Dishwasher according to at least one of the preceding claims, **characterised in that** one or more flow-conditioning means are formed by at least one perforated grating (6) and/or at least one perforated or slotted plate (8.1, 8.2).

34. Dishwasher according to claim 33, **characterised in that** the holes (D) and/or slots in the perforated grating (6) and/or the perforated or slotted plate (8.1, 8.2) are selected so as to be of different sizes.

35. Dishwasher according to at least one of the preceding claims, **characterised in that** the sorption unit (1) itself is at least partly realised as a flow-conditioning means for bringing about a largely even through-flow.

36. Dishwasher according to at least one of the preceding claims, **characterised in that** the sorption unit (4) is delimited by at least one screen (42, 42') in each case at its air intake and/or air output.

37. Dishwasher according to claim 36, **characterised in that** the screen apertures of the respective screen (42, 42') are realised so as to be of different sizes in such a way that the screen (42) at least partly forms a flow-conditioning means.

38. Dishwasher according to one or more of the preceding claims, **characterised in that** the sorption unit (4) has a largely identical layer thickness when viewed across its passage area for the inflowing airflow (15).

## Revendications

1. Lave-vaisselle avec une cuve de lavage (101) et un dispositif de séchage par sorption (1, 105) relié en conduction d'air à la cuve de lavage (101), dans lequel au moins un ventilateur (104) servant à générer un écoulement d'air (14) est prévu avant l'unité de sorption (4) du dispositif de séchage par sorption (1, 105), dans lequel au moins un élément de chauffage affecté (5) est prévu pour la désorption, dans le sens d'écoulement entre le ventilateur (104) et l'unité de sorption (4) avec le matériau de séchage réversiblement déshydrogénable (41) du dispositif de séchage par sorption (1, 105), et dans lequel un ou plusieurs agent(s) de conditionnement de l'écoulement (6, 8.1, 8.2, 10) est/sont prévu(s) afin d'homogénéiser le profil de la section d'écoulement de l'écoulement d'air (14) lors de la traversée du dispositif de séchage par sorption (1, 105) avant l'entrée de l'écoulement d'air dans l'unité de sorption (4), en particulier entre le ventilateur (104) et l'élément de chauffage (5), et/ou en particulier entre l'élément de chauffage (5) et l'unité de sorption (4).

2. Lave-vaisselle selon la revendication 1, **caractérisé en ce que** le dispositif de séchage par sorption (1, 105) présente au moins une unité de sorption (4) avec un matériau de séchage réversiblement déshydrogénable (41), en particulier un lit fixe de zéolite ou un remplissage de zéolite.

3. Lave-vaisselle selon la revendication 2, **caractérisé en ce que** l'un ou plusieurs agent(s) de conditionnement de l'écoulement (6, 8.1, 8.2, 10) est/sont exécuté(s) de telle manière que l'écoulement d'air (15) traverse l'unité de sorption (4) avec un débit volumique par unité de surface et/ou volume du matériau de séchage (41) de l'unité de sorption (4) essentiellement identique.

4. Lave-vaisselle selon au moins l'une des revendications précédentes, **caractérisé en ce que** l'un ou plusieurs agent(s) de conditionnement de l'écoulement (6, 8.1, 8.2, 10) conditionnent l'écoulement d'air (14) de telle manière qu'essentiellement chaque endroit de la surface de section d'entrée (401) de l'unité de sorption (4) dotée du matériau de séchage réversiblement déshydrogénable (41) du dispositif de séchage par sorption (1, 105) est alimenté et traversé par un débit volumique d'air (V) essentiellement identique.

5. Lave-vaisselle selon au moins l'une des revendications précédentes, **caractérisé en ce que** l'un ou plusieurs agent(s) de conditionnement de l'écoulement (6, 8.1, 8.2, 10) conditionnent l'écoulement d'air (14) de telle manière qu'essentiellement chaque endroit de la surface de section d'entrée (401) de l'unité de sorption (4) dotée du matériau de séchage réversiblement déshydrogénable (41) du dispositif de séchage par sorption (1, 105) est traversé par un débit volumique d'air (V) dont la température d'entrée (T) est essentiellement identique.

6. Lave-vaisselle selon au moins l'une des revendications précédentes, **caractérisé en ce que** l'un ou plusieurs agent(s) de conditionnement de l'écoulement (6, 8.1, 8.2, 10) conditionnent l'écoulement d'air (14) de telle manière qu'essentiellement chaque endroit de la surface de section d'entrée (401) de l'unité de sorption (4) dotée du matériau de séchage réversiblement déshydrogénable (41) du dispositif de séchage par sorption (1, 105) est traversé par un débit volumique d'air (V) dont la vitesse d'écoulement (VE) est essentiellement identique.

7. Lave-vaisselle selon au moins l'une des revendications précédentes, **caractérisé en ce que** le carter (3) du dispositif de séchage par sorption (1, 105) est formé et positionné de telle manière qu'il est traversé par un écoulement d'air (16) essentiellement vertical.

8. Lave-vaisselle selon au moins l'une des revendications précédentes, **caractérisé en ce que** le dispositif de séchage par sorption (1, 105) est prévu dans un module de sol (17) sous la cuve de lavage (101).

9. Lave-vaisselle selon au moins l'une des revendications précédentes, **caractérisé en ce que** l'unité de sorption (4) est disposée dans le carter du dispositif de séchage par sorption (1, 105) dans un plan d'agencement essentiellement horizontal.

10. Lave-vaisselle selon au moins l'une des revendications précédentes, **caractérisé en ce que** le dispositif de séchage par sorption (1, 105) est relié via au moins un canal d'écoulement d'air (103) à au moins une sortie (1031) et à au moins une entrée (1032) de la cuve de lavage (101).

11. Lave-vaisselle selon la revendication 10, **caractérisé en ce que** le canal d'écoulement d'air (103) est largement disposé en dehors de la cuve de lavage (101).

12. Lave-vaisselle selon l'une des revendications 10 ou 11, **caractérisé en ce que** le segment de tuyau côté sortie (103b) du canal d'écoulement d'air (103) est relié à au moins une entrée (1032) de la cuve de lavage (103) dans sa zone proche du sol.

13. Lave-vaisselle selon au moins l'une des revendications 10 à 12, **caractérisé en ce que** le segment de tuyau côté entrée (103a) du canal d'écoulement d'air (103) est relié à au moins une sortie (1031) de la cuve de lavage (103) dans sa zone proche du dessus.

14. Lave-vaisselle selon la revendication 13, **caractérisé en ce que** le segment de tuyau côté entrée (103a) du canal d'écoulement d'air (103) débouche de telle manière dans la zone proche du sol du carter (3) du dispositif de séchage par sorption (1, 105) que son sens d'écoulement entrant (14) est en particulier dévié d'environ 90° dans le sens d'écoulement (16) du carter (3).

15. Lave-vaisselle selon au moins l'une des revendications 10 à 14, **caractérisé en ce que** l'au moins un ventilateur (104) servant à générer l'écoulement d'air (104) pour l'unité de sorption (4) du dispositif de séchage par sorption (1) est prévu dans le segment de tuyau côté entrée (103a) du canal d'écoulement d'air (103) avant le dispositif de séchage par sorption (1, 105).

16. Lave-vaisselle selon au moins l'une des revendications précédentes, **caractérisé en ce que** l'au moins un élément de chauffage (5) est prévu, sous forme de composant du dispositif de séchage par sorption (1, 105), afin d'assurer sa désorption, dans le carter (3) du dispositif de séchage par sorption (1, 105), dans le sens d'écoulement, avant son unité de sorption (4) avec le matériau de séchage réversiblement déshydrogénable (41).

17. Lave-vaisselle selon la revendication 16, **caractérisé en ce que** l'élément de chauffage (5) se situe dans le carter (3) du dispositif de séchage par sorption (1, 105) en dessous de la surface de section d'entrée (401) de l'unité de sorption (4).

18. Lave-vaisselle selon au moins l'une des revendications précédentes, **caractérisé en ce que** l'un ou plusieurs agent(s) de conditionnement de l'écoulement (8.2), sont, dans le sens d'écoulement, spécifiquement prévu(s) pour l'élément de chauffage (5) entre le ventilateur (104) et l'élément de chauffage (5) qu'une alimentation est induite avec largement le même débit volumique d'air, en particulier la même vitesse d'écoulement essentiellement à chaque endroit de la surface d'alimentation de l'élément de chauffage (5).

19. Lave-vaisselle selon la revendication 18, **caractérisé en ce que** les agents de conditionnement de l'écoulement (8.2) pour l'élément de chauffage (5) sont logés dans le carter (3) du dispositif de séchage par sorption (1, 105), en particulier sous l'élément de chauffage (5).

20. Lave-vaisselle selon au moins l'une des revendications précédentes, **caractérisé en ce que** l'élément de chauffage présente au moins un thermoplongeur (5) ou au moins un élément hélicoïdal (5.1).

21. Lave-vaisselle selon la revendication 20, **caractérisé en ce que** l'élément hélicoïdal (5.1) présente une forme géométrique croissante, en particulier conique.

22. Lave-vaisselle selon l'une des revendications 20 ou 21, **caractérisé en ce que** le thermoplongeur (5) ou l'élément hélicoïdal (5.1) sont en outre encapsulés par un tuyau d'écoulement forcé externe (10).

23. Lave-vaisselle selon l'une ou plusieurs des revendications précédentes, **caractérisé en ce que** l'élément de chauffage (5, 5.1) est logé dans un segment de tuyau (10) servant à diriger l'écoulement d'air (14).

24. Lave-vaisselle selon la revendication 23, **caractérisé en ce que** dans le sens d'écoulement, le segment de tuyau (10) se rétrécit en ce qui concerne sa surface de section de passage.

25. Lave-vaisselle selon l'une des revendications 23 ou 24, **caractérisé en ce que** la section de tuyau (10) présente en son extrémité et/ou à sa surface un ou plusieurs orifice(s) de sortie d'air (11).

26. Lave-vaisselle selon au moins l'une des revendications précédentes, **caractérisé en ce qu'**au moins une tôle perforée ou présentant des fentes (8.1, 8.2) est disposée dans au moins un plan sur et/ou sous l'élément de chauffage (5 ; 5.1).

27. Lave-vaisselle selon l'une des revendications 25 ou 26, **caractérisé en ce que** l'écartement (d) de la tôle perforée ou présentant des fentes (8.1, 8.2) ou de la section de tuyau (10) de l'élément de chauffage (5 ; 5.1) et/ou la taille (D) des orifices ou fentes de la tôle perforée ou présentant des fentes (8.1, 8.2) ou du tuyau (10) sont sélectionnés de telle manière que l'unité de sorption (4) du dispositif de séchage par sorption (1, 105) soit essentiellement alimentée de manière identique en ce qui concerne sa surface de section d'entrée (401).

28. Lave-vaisselle selon au moins l'une des revendications précédentes, **caractérisé en ce que** des lamelles (12) de conditionnement de l'écoulement et/ou d'agrandissement de la surface de l'élément de chauffage (5 ; 5.1) sont prévues sur l'élément de chauffage (5 ; 5.1).

29. Lave-vaisselle selon au moins l'une des revendications précédentes, **caractérisé en ce que** l'un ou plusieurs agent(s) de conditionnement de l'écoulement (8.1) sont spécifiquement prévus pour l'unité de sorption (4) dans le sens d'écoulement entre au moins un élément de chauffage (5) et l'unité de sorption (4) du dispositif de séchage par sorption (105) de telle manière qu'essentiellement chaque endroit de la surface de section d'entrée (401) de l'unité de sorption (4) du dispositif de séchage par sorption (105) doté du matériau de séchage réversiblement déshydrogénable (41) est alimenté et traversé par un débit volumique d'air (V) essentiellement identique.

30. Lave-vaisselle selon au moins l'une des revendications précédentes, **caractérisé en ce que** l'un ou plusieurs agent(s) de conditionnement de l'écoulement (8.1) sont spécifiquement prévus pour l'unité de sorption (4) dans le sens d'écoulement entre au moins un élément de chauffage (5) et l'unité de sorption (4) du dispositif de séchage par sorption (105) de telle manière qu'essentiellement chaque endroit de la surface de section d'entrée (401) de l'unité de sorption (4) du dispositif de séchage par sorption (1, 105) doté du matériau de séchage réversiblement déshydrogénable (41) est traversé par un débit volumique d'air (V) dont la température d'entrée est largement identique.

31. Lave-vaisselle selon au moins l'une des revendications précédentes, **caractérisé en ce que** l'un ou plusieurs agent(s) de conditionnement de l'écoulement (8.1) sont spécifiquement prévus pour l'unité de sorption (4) dans le sens d'écoulement entre l'élément de chauffage (5) et l'unité de sorption (4) du dispositif de séchage par sorption (1, 105) de telle manière qu'essentiellement chaque endroit de la surface de section d'entrée (401) de l'unité de sorption (4) du dispositif de séchage par sorption (1, 105) doté du matériau de séchage réversiblement déshydrogénable (41) est traversé par un débit volumique d'air (V) dont la vitesse d'écoulement (VE) est largement identique.

32. Lave-vaisselle selon au moins l'une des revendications précédentes, **caractérisé en ce que** l'un ou plusieurs agent(s) de conditionnement de l'écoulement sont constitués par au moins un dispositif de guidage de l'écoulement (7), en particulier au moins un déflecteur qui dévie l'écoulement d'air (14).

33. Lave-vaisselle selon au moins l'une des revendications précédentes, **caractérisé en ce que** l'un ou plusieurs agent(s) de conditionnement de l'écoulement sont constitués par au moins une grille perforée (6) et/ou au moins une tôle perforée ou présentant des fentes (8.1, 8.2).

34. Lave-vaisselle selon la revendication 33, **caractérisé en ce que** les orifices (D) et/ou les fentes de la grille perforée (6) et/ou de la tôle perforée ou présentant des fentes (8.1, 8.2) sont sélectionnés selon des tailles différentes.

35. Lave-vaisselle selon au moins une des revendications précédentes, **caractérisé en ce que** l'unité de sorption (1) elle-même est au moins partiellement exécutée sous la forme d'un agent de conditionnement de l'écoulement afin d'induire un écoulement essentiellement identique.

36. Lave-vaisselle selon au moins l'une des revendications précédentes, **caractérisé en ce que** l'unité de sorption (4) est limitée par au moins un filtre (42, 42') à son entrée et/ou sa sortie d'air.

37. Lave-vaisselle selon la revendication 36, **caractérisé en ce que** les orifices de filtre des filtres respectifs (42, 42') sont exécutés selon des tailles différentes de telle sorte que le filtre (42) constitue au moins partiellement un agent de conditionnement de l'écoulement.

38. Lave-vaisselle selon l'une ou plusieurs des revendications précédentes, **caractérisé en ce que** l'unité de sorption (4) présente sur sa surface de traversée pour l'écoulement d'air entrant (15) une épaisseur de couche essentiellement identique.
